# EUROPEAN PATENT SPECIFICATION

(11) **EP 2 932 935 B1**
(45) Date of publication and mention of the grant of the patent: **18.07.2018**
(21) Application number: 15164612.2
(22) Date of filing: 03.03.2006
(51) Int. Cl.: A61C 7/08

(54) **METHOD OF PRODUCING FLUID-PERMEABLE DENTAL ALIGNERS**
VERFAHREN ZUM HERSTELLEN VON FLUIDDURCHLÄSSIGEN ALIGNERS
MÉTHODE DE FABRICATION DE GOUTTIÈRES ORTHODONTIQUES PERMÉABLES AUX FLUIDES

(30) Priority: 07.03.2005 US 74297; 07.03.2005 US 74298; 07.03.2005 US 74300; 07.03.2005 US 74301; 15.04.2005 US 107584; 29.04.2005 US 676100 P
(43) Date of publication of application: 21.10.2015
(62) Divisional of application: 06736955.3
(73) Proprietor: Align Technology, Inc., San Jose, CA 95134 (US)
(72) Inventor: Wen, Huafeng, Redwood City, CA 94065 (US); Liu, Frank, Redwood City, CA 94065 (US)
(74) Representative: Grünecker Patent- und Rechtsanwälte PartG mbB

(56) References cited:
- JP-A- H08 280 715
- US-A1- 2003 198 911

## Description

### TECHNICAL FIELD

This application generally relates to the field of dental care, and more particularly to the field of orthodontics.

### CROSS-REFERENCES TO RELATED INVENTIONS

The present invention claims priority to US patent applications: U.S. Patent Application Serial No. 11/074,301, titled "Dental Aligner for Providing Accurate Dental Treatment" by Wen et. al.; U.S. Patent Application Serial No. 11/074,297, titled "Producing Wrinkled Dental Aligner for Dental Treatment" by Wen et al.; U.S. Patent Application Serial No. 11/074,300, titled "Fluid Permeable Dental Aligner" by Huafeng Wen; U.S. Patent Application Serial No. 11/107,584, titled "Dental Aligner Devices Having Snap-On Connectors" by Wen et al.; U.S. Patent Application Serial No. 11/074,298, titled "Disposable Dental Aligner" by Huafeng Wen; and U.S. Provisional Patent Application Serial No. 60/676,100, titled "Nonuniform Dental Aligner and Methods" by Huafeng Wen.

Refer also to commonly assigned U.S. Patent applications: U.S. Provisional Patent Application Serial No. 60/676,546, titled "Digitization of Dental Arch Model Components" by Huafeng Wen; U.S. Provisional Patent Application 60/673,970, titled "System for Digitizing and Registering a Subject's Upper and Lower Dental Arches" by Wen et. al.; and U.S. Patent Application 11/205,496, titled "System for Organizing Dental Aligners" by Huafeng Wen.

Refer also to U.S. Patent Application Serial No. 11/074,301, titled "Dental aligner for providing accurate dental treatment" by Liu et al, filed 3/7/2005, U.S. Patent Application Serial No. 11/074,297, titled "Producing wrinkled dental aligner for dental treatment" by Liu et al, filed 3/7/2005, U.S. Patent Application Serial No. 11/074,300, titled "Fluid permeable dental aligner" by Huafeng Wen, filed 3/7/2005, U.S. Patent Application Serial No. 11/074,298, titled "Disposable dental aligner by Huafeng Wen, filed 3/7/2005, and U.S. Patent Application Serial No. 11/050,051, titled "Storage system for dental devices" by Huafeng Wen, filed 2/3/2005.

Refer also to U.S. Patent Application Serial No. 10/979,823, titled "Method and apparatus for manufacturing and constructing a physical dental arch model" by Huafeng Wen, filed 11/2/2004, U.S. Patent Application Serial No. 10/979,497, titled "Method and apparatus for manufacturing and constructing a dental aligner" by Huafeng Wen, filed 11/2/2004, U.S. Patent Application Serial No. 10/979,504, titled "Producing an adjustable physical dental arch model" by Huafeng Wen, filed 11/2/2004, and U.S. Patent Application Serial No. 10/979,824, titled "Producing a base for physical dental arch model" by Huafeng Wen, filed 11/2/2004.

Refer also to U.S. Patent Application Serial No. 11/013,152, titled "A base for physical dental arch model" by Huafeng Wen, filed 12/14/2004, U.S. Patent Application Serial No. 11/012,924, titled "Accurately producing a base for physical dental arch model" by Huafeng Wen, filed 12/14/2004, U.S. Patent Application Serial No. 11/013,145, titled "Fabricating a base compatible with physical dental tooth models" by Huafeng Wen, filed 12/14/2004, U.S. Patent Application Serial No. 11/013,156, titled "Producing non-interfering tooth models on a base" by Huafeng Wen, filed 12/14/2004, U.S. Patent Application Serial No. 11/013,160, titled "System and methods for casting physical tooth model" by Huafeng Wen, filed 12/14/2004, U.S. Patent Application Serial No. 11/013,159, titled "Producing a base for accurately receiving dental tooth models" by Huafeng Wen, filed 12/14/2004, U.S. Patent Application Serial No. 111013,157, titled "Producing accurate base for dental arch model" by Huafeng Wen, filed 12/14/2004.

### BACKGROUND

Orthodontics is the practice of manipulating a subject's teeth to provide better function and appearance. In general, brackets are bonded to a subject's teeth and coupled together with an arched wire. The combination of the brackets and wire provide a force on the teeth causing them to move. Once the teeth have moved to a desired location and are held in a place for a certain period of time, the body adapts bone and tissue to maintain the teeth in the desired location. To further assist in retaining the teeth in the desired location, a subject may be fitted with a retainer.

To achieve tooth movement, orthodontists utilize their expertise to first determine a three-dimensional mental image of the subject's physical orthodontic structure and a three-dimensional mental image of a desired physical orthodontic structure for the subject, which may be assisted through the use of x-rays and/or models. Based on these mental images, the orthodontist further relies on his/her expertise to place the brackets and/or bands on the teeth and to manually bend (i.e., shape) wire, such that a force is asserted on the teeth to reposition the teeth into the desired physical orthodontic structure. As the teeth move towards the desired location, the orthodontist makes continual judgments as to the progress of the treatment, the next step in the treatment (e.g., new bend in the wire, reposition or replace brackets, is head gear required, etc.), and the success of the previous step.

In general, the orthodontist makes manual adjustments to the wire and/or replaces or repositions brackets based on his or her expert opinion. Unfortunately, in the oral environment, it is difficult for a human being to accurately develop a visual three-dimensional image of an orthodontic structure due to the limitations of human sight and the physical structure of a human mouth. In addition, it is difficult (if not impossible) to accurately estimate three-dimensional wire bends (with accuracy within a few degrees) and to manually apply such bends to a wire. Further, it is difficult (or impossible) to determine an ideal bracket location to achieve the desired orthodontic structure based on the mental images. It is also extremely difficult to manually place brackets in what is estimated to be the ideal location. Accordingly, orthodontic treatment is an iterative process requiring multiple wire changes, with the success and speed of the process being dependent on the orthodontist's motor skills and diagnostic expertise. As a result of multiple wire changes, cost and subject discomfort is increased. The quality of care may also vary greatly from orthodontist to orthodontist, as does the time to treat a subject.

The practice of orthodontic is very much an art, relying on the expert opinions and judgments of the orthodontist. In an effort to shift the practice of orthodontic from an art to a science, many innovations have been developed. For example, U.S. Pat. No. 5,518,397 issued to Andreiko, et. al. provides a method of forming an orthodontic brace. Such a method includes obtaining a model of the teeth of a patient's mouth and a prescription of desired positioning of such teeth. The contour of the teeth of the patient's mouth is determined, from the model. Calculations of the contour and the desired positioning of the patient's teeth are then made to determine the geometry (e.g., grooves or slots) to be provided. Custom brackets including a special geometry are then created for receiving an arch wire to form an orthodontic brace system. Such geometry is intended to provide for the disposition of the arched wire on the bracket in a progressive curvature in a horizontal plane and a substantially linear configuration in a vertical plane. The geometry of the brackets is altered, (e.g., by cutting grooves into the brackets at individual positions and angles and with particular depth) in accordance with such calculations of the bracket geometry. In such a system, the brackets are customized to provide three-dimensional movement of the teeth, once the wire, which has a two dimensional shape (i.e., linear shape in the vertical plane and curvature in the horizontal plane), is applied to the brackets.

Other innovations relating to bracket and bracket placements have also been described. For example, such patent innovations are disclosed in U.S. Pat. No. 5,618,716 entitled "Orthodontic Bracket and Ligature," which describes a method of ligating arch wires to brackets, U.S. Pat. No. 5,011,405 "Entitled Method for Determining Orthodontic Bracket Placement," U.S. Pat. No. 5,395,238 entitled "Method of Forming Orthodontic Brace," and U.S. Pat. No. 5,533,895 entitled "Orthodontic Appliance and Group Standardize Brackets therefore and methods of making, assembling and using appliance to straighten teeth".

Kuroda et al. (1996) Am. J. Orthodontics 110:365-369 describes a method for laser scanning a plaster dental cast to produce a digital image of the cast. See also U.S. Pat. No. 5,605,459. U.S. Pat. Nos. 5,533,895; 5,474,448; 5,454,717; 5,447,432; 5,431,562; 5,395,238; 5,368,478; and 5,139,419, assigned to Ormco Corporation, which describe methods for manipulating digital images of teeth for designing orthodontic appliances.

U.S. Pat. No. 5,011,405 describes a method for digitally imaging a tooth and determining optimum bracket positioning for orthodontic treatment. Laser scanning of a molded tooth to produce a three-dimensional model is described in U.S. Pat. No. 5,338,198. U.S. Pat. No. 5,452,219 describes a method for laser scanning a tooth model and milling a tooth mold. Digital computer manipulation of tooth contours is described in U.S. Pat. Nos. 5,607,305 and 5,587,912. Computerized digital imaging of the arch is described in U.S. Pat. Nos. 5,342,202 and 5,340,309.

Other patents of interest include U.S. Pat. Nos. 5,549,476; 5,382,164; 5,273,429; 4,936,862; 3,860,803; 3,660,900; 5,645,421; 5,055,039; 4,798,534; 4,856,991; 5,035,613; 5,059,118; 5,186,623; and 4,755,139.

Efficiency in treatment and maximum quality in results may depend on a realistic simulation of the treatment process. Plaster models of the upper and lower arch may be made, the model may be cut into single tooth models and these tooth models can be stuck into a wax bed, in a desired position, to create a "set-up." This approach allows modeling of a perfect occlusion without any guessing. The next step is to bond a bracket at every tooth model. This would tell the orthodontist the geometry of the wire to run through the bracket slots to receive exactly this result. Then the bracket position may be transferred to the original malocclusion model. To make sure that the brackets will be bonded at exactly this position at the real patient's teeth, small templates for every tooth would have to be fabricated that fit over the bracket and a relevant part of the tooth and allow for reliable placement of the bracket on the patient's teeth. To increase efficiency of the bonding process, another option would be to place each single bracket onto a model of the malocclusion and then fabricate one single transfer tray per arch that covers all brackets and relevant portions of every tooth. Using such a transfer tray guarantees a very quick and yet precise bonding using indirect bonding.

U.S. Pat. No. 5,431,562 to Andreiko et al. describes a computerized, appliance-driven approach to orthodontics. In this method, first certain shape information of teeth is acquired. A uniplanar target archform is calculated from the shape information. The shape of customized bracket slots, the bracket base, and the shape of the orthodontic archwire, are calculated in accordance with a mathematically-derived target archform. The goal of the Andreiko et al. method is to give more predictability, standardization, and certainty to orthodontics by replacing the human element in orthodontic appliance design with a deterministic, mathematical computation of a target archform and appliance design. Hence the '562 patent teaches away from an interactive, computer-based system in which the orthodontist remains fully involved in patient diagnosis, appliance design, and treatment planning and monitoring.

Align Technologies recently began offering transparent, removable aligning devices as a new treatment modality in orthodontics. In this system, an impression model of the dentition of the patient is obtained by the orthodontist and shipped to a remote appliance-manufacturing center, where it is scanned with a CT scanner. A computer model of the dentition in a target situation is generated at the appliance-manufacturing center and made available for viewing to the orthodontist over the Internet. The orthodontist indicates changes they wish to make to individual tooth positions. Later, another virtual model is provided over the Internet and the orthodontist reviews the revised model, and indicates any further changes. After several such iterations, the target situation is agreed upon. A series of removable aligning devices or shells are manufactured and delivered to the orthodontist. The shells, in theory, will move the patient's teeth to the desired or target position.

US Patent 6,699,037 by Align Technologies describes an improved methods and systems for repositioning teeth from an initial tooth arrangement to a final tooth arrangement. Repositioning is accomplished with a system comprising a series of appliances configured to receive the teeth in a cavity and incrementally reposition individual teeth in a series of at least three successive steps, usually including at least four successive steps, often including at least ten steps, sometimes including at least twenty-five steps, and occasionally including forty or more steps. Most often, the methods and systems will reposition teeth in from ten to twenty-five successive steps, although complex cases involving many of the patient's teeth may take forty or more steps. The successive use of a number of such appliances permits each appliance to be configured to move individual teeth in small increments, typically less than 2 mm, preferably less than 1 mm, and more preferably less than 0.5 mm. These limits refer to the maximum linear translation of any point on a tooth as a result of using a single appliance. The movements provided by successive appliances, of course, will usually not be the same for any particular tooth. Thus, one point on a tooth may be moved by a particular distance as a result of the use of one appliance and thereafter moved by a different distance and/or in a different direction by a later appliance.

The individual appliances will preferably comprise a polymeric shell having the teeth-receiving cavity formed therein, typically by molding as described below. Each individual appliance will be configured so that its tooth-receiving cavity has a geometry corresponding to an intermediate or end tooth arrangement intended for that appliance. That is, when an appliance is first worn by the patient, some of the teeth will be misaligned relative to an undeformed geometry of the appliance cavity. The appliance, however, is sufficiently resilient to accommodate or conform to the misaligned teeth, and will apply sufficient resilient force against such misaligned teeth in order to reposition the teeth to the intermediate or end arrangement desired for that treatment step.

The fabrication of aligners by Align Technologies utilizes stereo lithography process as disclosed in US patents 6471,511 and 6,682,346. Several drawbacks exist however with the stereo lithography process. The materials used by stereo lithography process may be toxic and harmful to human health. Stereo lithography process builds the aligner layer by layer by layer, which may create room to hide germs and bacteria while it is worn by a patient. Furthermore, stereo lithography process used by Align Technology also requires a different aligner mold at each stage of the treatment, which produces a lot of waste and is environmental unfriendly. There is therefore a long felt need for practical, effective and efficient methods to produce a dental aligner.

Another challenge for orthodontic treatment using removable dental aligning devices is that dental aligners often deform or otherwise loose their shape with age, use and/or environment. For example, a dental aligner (e.g., a "shell") may be deformed by chewing, biting, and hot beverages during wearing by the patient. The deformation can affect the proper function of the removable dental aligning device, because the ability of the aligner to effectively move teeth may depend upon the contact that the aligner makes with the teeth.

Furthermore, dental aligners may become relaxed and open up after repeated usage by a patient, which causes a loss of corrective forces applied by the aligner to the patient's teeth. This results in insufficient or inaccurate teeth movement and costly corrective measures in the orthodontic treatment.

Another difficulty with the current removable dental aligning devices is that the narrow tolerance for the removable dental aligning devices to fit to the patient's teeth. The removable dental aligning devices have to be produced very close to the surface profiles of the patient's teeth. Mismatch between the removable dental aligning devices and patient's teeth often produce discomfort in wearing the removable dental aligning devices.

Existing aligner have not adequately addresses these problems. For example, U.S. Patent 4,793,803 by Martz discloses separate appliances insertable in and removable from the upper and lower jaws of the subject to correct minor malocclusions. Martz describes: (a) a fairly rigid portion which mates with or securely grips the tooth surface, (b) a rigid portion to provide the base and shape, and (c) an intermediate, flexible resilient portion interposed between (a) and (b) which biases the teeth into the desired position. The rigidity of the rigid portion may vary depending on the condition of an individual case. In some instances the rigid portion need only be somewhat flexible, thereby performing the function of the intermediate portion as well.

US Patent 6,309,215 by Phan et al. describes systems and methods for removably attaching a dental positioning appliance to the teeth of a subject during orthodontic treatment. Such removable dental positioning appliances are often preferred over conventional braces for tooth repositioning due to comfort, appearance and ease of use. These appliances apply force to specific surfaces of the teeth to cause directed movement. However, the type of movement and amount of force applied is usually dependent on the surface characteristics and positions of connection to the teeth. The appliances or connection between the appliance and the teeth may not provide sufficient anchoring to impart a desired force on the teeth to be repositioned. Thus, such systems may require the use of one or more attachment devices that may be positioned on the teeth to provide the appropriate physical features. Appliances may attach to a subject's teeth by interactions with a pit or dimple on the dental aligning devices are often not secure enough, especially when large teeth movements are required. Furthermore, over a period of usage by a subject, an aligner can also become relaxed and open up. Dental aligning devices that attach to the subject's teeth by dimples may slip over the attachment, which can result in inaccurate teeth movement and costly corrective measures in the orthodontic treatment. However, specific design and location of these attachment devices may provide more effective repositioning forces, anchoring ability and appliance retention.

Another issue with most commercially available removable aligning devices (e.g., the devices manufactured by Align Technologies) is that the aligning devices do not allow oxygen to pass through them. A typical treatment takes about 18 to 24 months, and during this interval the cervical lines of the patient wearing such appliances typically remain covered for the major part of the day without letting air to pass through them. Oxygen cannot reach the cells of the cervical lines, and air trapped inside the aligning appliances cannot readily escape. Anaerobic bacteria such as Fusobacterium and Actinomyces often thrive in an oxygen-deprived environment and may produce volatile sulfur compounds (VSC) as byproducts, which can result in bad breath (halitosis) and hygiene problems in the patient's mouth.

In addition to the problems identified above, many aligners are also limited in their ability to effect corrections requiring lateral expansion of the palate. Most presently available aligners move only the teeth, with only minimal impact on the motion of the palate. Further, traditional devices for expanding the palate are difficult to manufacture, and are incapable of correcting the entire upper dental arch. For example, US Patent application Serial Number 10/636,313 to McSurdy describes a palatal expansion device. Thus, it would be desirable to provide an economical, easily fabricated aligner capable of reforming the entire upper dental arch, including the palate.

The devices, systems, and methods described herein illustrate removable dental aligners having one or more features addressing at least some of the problems described above. In particular described herein are variations of dental aligners including dental aligners having through-holes through which connectors securable to a subject's teeth may pass and be secured, dental aligners including controllably deformable regions or textured surfaces (e.g., wrinkled aligners), non-uniform and/or multilayer dental aligners, and dental aligners which are fluid and/or gas permeable. Any or all of these features may be combined to form a dental aligner, as described more fully below.

### SUMMARY OF THE INVENTION

Described herein are systems, methods and devices to correct or modify the position of a subject's teeth. Methods of manufacturing such apparatuses are also described. In particular dental appliances are described. Any of the variations of dental appliances, as well as methods of designing, fabricating, and using them are illustrated. Dental appliances may be any appropriate dental device, including dental aligners. The term dental aligner may also generally refer to any appropriate dental appliance.

Any of the features described (e.g., snap-on dental aligners, textured, fluid- and/or gas- permeable, wrinkled, modular, or varying thickness, stiffness or other properties) may be incorporated as part of a dental aligner, individually or in any reasonable combination. For purposes of descriptive convenience only, individual dental aligners are described or illustrated to emphasize only one or a few features. This arrangement is not intended to be limiting or to imply that the aligners, system, and methods of making or using these aligners are restricted to the examples shown or described.

Dental aligners may incorporate features that assist in securing the dental aligner to a subject's teeth, for helping the aligner maintain its conformation or resisting wear and relaxation, and for improving the comfort and effectiveness of the aligner. For example, the dental aligner may be a "snap-on" dental aligner (which may be secured to connectors on a subject's teeth). The dental aligners produced by the method of the appended claims are fluid permeable. The dental aligners may be non-uniform and/or may be multi-layered dental aligners. The dental aligners may be textured or shaped to permit a predictable expansion or contraction of the dental aligner. For example, the dental aligner may be a wrinkled aligner.

The present invention is defined by the appended claims.

Snap-on dental aligners may include one or more of the following.

Snap-on dental aligners may produce corrective movement in a subject's teeth, and may include a dental aligner (or shell) configured to be worn on a subject's teeth, and one or more through-holes passing through the device. The aligner device includes a shell portion having an outer surface and an inner surface, wherein at least a portion of the inner surface is configured to contact the subject's tooth. Thus, the thorough-holes extend from the outer surface to the inner surface of the shell portion of the dental device. The through-hole is configured to mate with a connector.

A system for producing corrective movement in a subject's teeth may includes a dental aligner device having one or more through-holes, configured to be worn on the subject's teeth, and one or more connectors that are configured to be fixed to the subject's teeth. The connectors are configured to engage with the through-holes when the dental aligner is worn on the subject's teeth.

A system for producing a snap-on dental aligner for dental treatment may include a guide to indicate the location where through-holes (corresponding to connectors on the subject) are to be formed on a dental aligner, and a positioner (a positioning device) to position a hole-maker with respect to the dental aligner based on the information provided by the guide. In some variations, the system also includes a hole-maker to produce through-holes in the dental aligner at the positions indicated by the guide to produce the snap-on dental aligner.

A method for moving a subject's teeth in a dental treatment may comprise fabricating a dental aligner to be worn on the subject's teeth, producing one or more through-holes in the dental aligner, fixing one or more connectors on the subject's teeth to engage the through-holes, and engaging the one or more connectors on the subject's teeth with the through-holes of the dental aligner to secure the dental aligner on the subject's teeth.

Embodiments described herein may provide practical methods and systems for making dental aligners (e.g., snap-on dental aligners) and associated receiving connectors on the subject's teeth. The aligners can be attached onto the subject's teeth and assure the dental aligner to be in precise registration as designed throughout the period of wearing by the subject. The aligners may also overcome the aligner relaxation problem due to repeated uses, which is common in prior art dental aligners. The snap-on dental aligner therefore can ensure that the aligner produces the correct force to achieve a desirable movement in the subject's teeth, which improves the accuracy and effectiveness of the orthodontic treatment by the aligner.

One disclosed mechanisms in the dental aligners described include through-holes in the dental aligners and connectors fixed on a subject's teeth to receive the through-holes. The disclosed mechanisms allow the dental aligners to be effectively locked into intended positions during wearing by the subject. The registration and holding capability may thus be significantly enhanced.

The snap-on dental aligners may also lengthen the usage lifetime of an aligner by sustaining corrective forces for a longer period of time. As a result, the number of visits to the dentist office may be reduced. The material and manufacture costs of the aligners for an orthodontic treatment may be decreased. The need for corrective rework due to aligner deformation may also be significantly reduced, which may further reduce costs of the orthodontic treatment.

Snap-on dental aligners may allow a thinner dental aligner while still engaging that subject's teeth and providing sustainable forces to cause teeth movement. Thinner and lower profiled removable dental aligners are less intrusive to subject's mouth and often more comfortable for the subject to wear. Snap-on dental aligners may be applicable to class II bite corrections in dental treatment.

The properties of the snap-on aligners may also be simulated and optimized in the design process. The performance of the snap-on aligners can be optimized by varying parameters such as the number, the locations, and the density of the snap-on connectors, and the sizes and locations of the through-holes in the snap-on mechanisms, etc. The snap-on dental aligners can be manufactured by cost-effective processes such as vacuum forming, cutting by a cutter, etching by a laser beam or thermal applier, and CNC based manufacturing.

Dental appliances may have properties that differ in various portions of the appliance. Properties that may differ in various regions of the appliance may include one or more of the following: color, texture, flexural strength, tensile modulus, flexural modulus, hardness, thermal conductivity, heat capacity, compression modulus, and toughness. Thus, regions of the appliance may differ from one another by one or more of the properties listed above. Examples of appliances having regions of different properties (as well method of designing, manufacturing and using such appliances) are described herein.

The difference in properties of the appliance (e.g., a dental aligner) may be introduced by incorporating two or more polymers into an appliance. The polymers may be the same type (e.g. thermoplastic or thermoset) or may be of different types. The polymers may be different chemical compositions (e.g. polyurethane and silicone polymer), or they may be the same chemical composition (e.g. acrylic polymer) that has been formed under different conditions to provide polymers of distinctive properties. The polymers may be homopolymers or copolymers in which the ratio of monomers in regions differs or is the same. The polymers may also be one or more polymer blends or alloys.

The appliances may be made by e.g. utilizing different polymer sheets in molds to provide an appliance in which layers of polymer in one or more regions or in the entire appliance differ from an adjacent layer or layers, or the appliances may be made by treating a polymer to different processing conditions during appliance manufacturing to provide a continuous polymeric construction across borders of the regions but in which properties differ from region to region across the appliance.

For example, a method for making a multi-layer dental aligner may comprise placing a first layer of a first aligner-making material over one or more physical tooth models, conforming the first layer of the first aligner-making material to the surfaces of the one or more physical tooth models, placing a second layer of a second aligner-making material over the first layer of the first aligner-making material, and conforming the second layer of the second aligner-making material to the surfaces of the first layer of the first aligner-making material over the one or more physical tooth models to produce the multi-layer dental aligner.

In some variations, a method for making a multi-layer dental aligner comprises heating a first layer of the first aligner-making material, holding the first layer of the first aligner-making material against one or more physical tooth models by vacuum suction, cutting the first layer of the first aligner-making material along the gingival lines of the physical tooth models, heating a second layer of the second aligner-making material, holding the second layer of the second aligner-making material against the first layer of the first aligner-making material over the physical tooth models by vacuum suction, and cutting the second layer of the second aligner-making material along the gingival lines of the physical tooth models to produce the multi-layer dental aligner.

In some variations, a multi-layer dental aligner may comprise a first layer of a first aligner-making material and a second layer of a second aligner-making material, wherein at least one of the first layer and the second layer is formed by heating a layer of an aligner-making material and holding the layer of the aligner-making material against one or more physical tooth models.

Another method for making a non-uniform dental aligner comprises non-uniformly heating the sheet of aligner-making material, and holding the sheet of aligner-making material against one or more physical tooth models to produce the non-uniform dental aligner.

Additionally, a method for making a non-uniform dental aligner may comprise heating a first section of a sheet of aligner-making material at a first temperature for a first period of time, heating a second section of the sheet of aligner-making material at a second temperature for a second period of time, holding the sheet of aligner-making material against the one or more physical tooth models to produce the non-uniform dental aligner by vacuum suction; and cutting the sheet of aligner-making material along the gingival lines of the physical tooth models to produce the non-uniform dental aligner.

Dental appliances may also be fluid permeable. For example, a dental aligner may be fluid permeable while still supplying adequate strength and structure necessary to move the teeth in the desired manner. "Fluid permeable" may refer to permeability to both liquids (e.g., water, saliva, etc.) and/or gasses (e.g., oxygen). A dental appliance may be fluid permeable because it comprises a fluid permeable material, or because it has been permeabilized by the addition of pores, passages or holes of any appropriate size or shape.

For example, a shell-shaped dental aligner for producing predetermined movement in a patient's tooth may comprise a shell portion comprising a fluid-permeable material; an outer surface of the shell portion; and an inner surface of the shell portion, the inner surface to be in contact with the patient's tooth, wherein the fluid-permeable material can allow fluid to communicate between the patient's tooth and the vicinity of the outer surface.

A method for treating a patient's teeth may therefore comprising determining an initial configuration of the patient's teeth, determining a final configuration of the patient's teeth, designing a movement path for at least one of the patient's teeth from the initial configuration to the final configuration, dividing the movement path into a plurality of successive treatment steps (each having a target configuration for the patient's teeth) and producing a dental aligner comprising a fluid-permeable material to move the patient's teeth to the target configuration associated with a treatment step. A system for treating a patient's teeth may comprising a computer configured to determine a target configuration for the patient's teeth and an apparatus configured to produce a dental aligner comprising a shell portion that comprises a fluid-permeable material, an outer surface, and an inner surface to be in contact with one of the patient's teeth. The fluid-permeable material can allow fluid to communicate between the one of the patient's teeth and the vicinity of the outer surface and the dental aligner is configured to move the patient's teeth to the target configuration.

Fluid permeable dental aligning devices may readily allow oxygen to pass through to the patient's teeth and cervical lines in the arch. Permitting an increased oxygen concentration under the dental aligning devices can overcome problems related to bacterial growth under the aligner device (which may be a problem for conventional aligner systems). Porous channels may also allow saliva to pass through the dental aligners. Saliva plays a critical role in controlling halitosis and bacterial growth. Saliva contains proteins, carbohydrates, and immunoglobulins that interfere with bacterial metabolism and bacterial adherence to oral surfaces. Saliva is also a solvent that can control mouth odor in the oral chemical environment. Thus, oral hygiene and odor associated with the mouth of a patient wearing a fluid permeable dental aligner may be improved, particularly in comparison with non-permeable or less-permeable appliances. Further, the ability to pass oxygen and saliva not only improves the patient's oral hygiene but may also allow the patient to clean the aligner less frequently, enhancing convenience. The less frequent removal (because of extended wearing) can also lengthen the usage lifetime and the effectiveness of the dental aligning devices.

The appliances described herein may also be disposable. Thus, a method for treating a patient's teeth with a disposable aligner may include using more than one appliance (e.g., 2, 3, 4, etc.) that are otherwise identical for each step of the treatment. For example, one method of treating a patients teeth using disposable aligners includes: determining an initial configuration of the patient's teeth, determining a final configuration of the patient's teeth, designing a movement path for at least one of the patient's teeth from the initial configuration to the final configuration, dividing the movement path into a plurality of successive treatment steps, each having a target configuration for the patient's teeth, and producing two or more dental aligners of substantially identical shape for at least one of the treatment steps in accordance with the target configuration. Aligners having substantially identical shape are generally aligners that would produce the same movement of the teeth if either aligner were placed on an identical (e.g., initial) dental arch.

A method for treating a patient's teeth may also comprise: determining a target configuration for the patient's teeth, producing two dental aligners having substantially identical shape, and using the two dental aligners to move the patient's teeth to the target configuration.

Disposable aligner may be used for each step of the treatment process, or may be used for only some (e.g., steps requiring the same shaped aligner to be worn for an extended period) treatment steps. In some variations, a disposable aligner may be provided for pre-determined increments of time (e.g., for each day, each week, each month, etc.). Thus, a system for treating a patient's teeth may comprise: a computer configured to determine a target configuration for the patient's teeth; and an apparatus configured to produce two dental aligners configured to move the patient's teeth to the target configuration, wherein the two dental aligners have substantially identical shape.

Disposable aligners may provide convenient dental aligning devices for patients. The dental aligners. As used herein the term "disposable" aligners refers may refer to redundant dental aligners provided to the patient at each treatment step so that a "new" aligner having the same shape can be used during one or more of the treatment steps. Thus, if a dental aligner is lost or damaged, the patient does not have to request another aligner and wait for it to be made and sent to her. This may make treatment and storage of the aligners easier for the patient, as special care (to prevent damage, loss or wear) does not need to be taken. The disclosed disposable dental aligners are therefore more convenient for patients to use. The costs may also be reduced for re-ordering and remaking lost or damaged dental aligners.

Disposable aligners may also provide more accurate and effective dental treatment for the patients. Conventional dental aligners often relax over the use of a period of time and lose their strength to exert intended forces on the patients' teeth, which results in ineffective and inaccurate movements for the dental treatment. When multiple dental aligners are provided at each treatment step, dental aligners can be disposed before they become relaxed. The accuracy and effectiveness of the dental treatment are therefore improved. As a result, the overall treatment time and cost can be reduced.

Furthermore, disposable aligners may also improves a patient's oral hygiene by allowing the patient to frequently replace the dental aligner worn by a short period of time by new dental aligner.

The dental appliances described herein may also be configured or fabricated so that they prevent deformation of the appliance. For example, a dental aligner may be configured to allow some flexion or expansion of the appliance in predetermined regions. For example, the appliance may include "wrinkles" over at least a region of their length. A wrinkled aligner typically has one or more surfaces (or regions) that are furrowed, ridged, or creased rather than normally smooth. For example, the wrinkles in the aligner surface may appear crumpled, folded, or curved. The wrinkles may allow the appliance to bend or expand to a greater degree than an otherwise unwrinkled aligner, thereby preventing material stresses that may damage the appliance.

A method for manufacturing wrinkled dental aligner for a patient's tooth may comprise: developing a digital dental aligner model specifying at least one wrinkled surface on a dental aligner, and producing a dental aligner having the wrinkled surface in accordance with digital dental aligner model.

In some variations, a method for manufacturing wrinkled dental aligner for a patient's arch, comprises: developing a digital dental arch model based the patient's arch, developing a digital dental aligner model based on the digital dental arch model, wherein the digital dental aligner model specifies one or more wrinkles on a surface, and producing a wrinkled dental aligner in accordance with the digital dental aligner model. A system for manufacturing a wrinkled dental aligner for a patient may comprise: a computer configured to store a digital dental aligner model specifying at least one wrinkled surface on the wrinkled dental aligner, and an apparatus configured to produce the wrinkled dental aligner in accordance with digital dental aligner model.

Wrinkled appliances may provide advantages over non-wrinkled appliances. For example, a wrinkled aligner prevents the relaxation of the dental aligner after repeated uses, which is common in prior art systems. The wrinkled dental aligner therefore can ensure the aligner to produce the correct force to produce desirable movement in the patient's teeth, which improves the accuracy and effectiveness of the orthodontic treatment by the aligner. The reduction or elimination of the relaxation and force loss that are problems associated with conventional dental aligners may also lengthen the lifetime of the aligner. As a result, the number of visits to the dentist office is reduced. The material and manufacture costs of the aligners for an orthodontic treatment are decreased. Additionally, corrective rework due to aligner deformation may be significantly reduced, further reducing costs of the orthodontic treatment.

The properties of the wrinkled aligners can be simulated and optimized in the design process. The performance of the wrinkled aligners can be optimized by simulating and varying wrinkle parameters such as wrinkle depth, wrinkle location and orientation, and wrinkle density. The wrinkled dental aligner can be manufactured by cost-effective processes such as vacuum forming, cutting by a cutter, etching by a laser beam or thermal applier, or CNC based manufacturing.

Also described herein are aligners that are capable of lateral corrections, including expanding the upper palate. Such aligners may be referred to as "lateral correction aligners" and are for the upper dental arch. Lateral correction aligners typically include a shell region that covers the teeth and contacts at least a portion of the upper pallet. The aligner design encourages movement of the upper palate by modeling the target position of the upper palate and generating one or more incremental steps (as described herein with respect to movements of the teeth). This allows lateral corrections to be made on the teeth and upper pallet.

Typically, aligners configured for laterally correcting the teeth and/or remodeling the upper palate include a palate-spanning region. In order to provide later force on the teeth and pallet by the aligner, the palate-spanning region may include a support piece for maintaining and/or applying force against the palate and/or teeth. Support pieces may include any material having structural strength (e.g., metals, ceramics, etc.), but in particular, may comprise materials capable of applying force to remodel the upper dental arch. For example, the support piece may be a spring or other expandable member. The support piece may be included (e.g., sandwiched) within the palate region of the aligner. This may make the aligner more comfortable, and prevent damage to either the tongue or palate region.

The lateral correction aligners may be configured either to expand or contract the palate. Further lateral correction aligners may be formed by any of the methods described herein. For example, the lateral correction aligners may be formed using a model of the upper dental arch (e.g., by vacuum-forming one or more layers of material) or may be formed from a digital model (e.g., by CNC, lithography, etc.).

Thus, lateral correction dental aligners for remodeling a subject's upper dental arch (including the palate region) may include a shell having an outer surface and an inner surface, and a palate-spanning region, wherein the palate-spanning region is configured to contact the subject's upper palate and provide force to remodel the subject's upper arch. The shell region typically comprises a tooth contacting region configured to contact the teeth of the subject's upper arch. As described herein, the shell region typically contacts both sides of the subject's teeth (front and back). The shell region of the lateral correction aligner typically contacts all of the subject's teeth that are present (e.g., including the incisors, canines, bicuspids, molars). The palate-spanning region generally covers at least a portion of the subject's palate when the subject wears the aligner. For example, the palate-spanning region may correspond to a substantial portion of the subject's hard palate. The palate-spanning region may correspond to the front of the subject's hard palate (near the incisors) as well as the back of the subject's hard palate region (e.g., near the molars).

In some variations, the palate-spanning region further comprises a support piece configured to provide structural support to the palate-spanning region. The support piece may span the entire palate-spanning region, or it may be a portion of the palate-spanning region. The palate-spanning region may be made of a fluid-permeable material as described above, including materials that have been permeablized by adding passages through them (e.g., by laser perforation, etc.).

Also described herein is a method for reshaping a patient's dental palate, comprising: determining an initial configuration of the patient's teeth and upper palate region (e.g., by modeling or by direct measurement), determining a final configuration of the patient's teeth and upper palate region, designing a movement path for at least a portion of the upper palate region from the initial configuration to the final configuration, dividing the movement path into a plurality of successive treatment steps, and producing a plurality of dental aligners including a palate-spanning region to remodel the upper palate region to the target configuration.

The details of one or more embodiments of these dental aligners are set forth in the accompanying drawing and in the description below. Other features, objects, and advantages of the invention will become apparent from the description and drawings, and from the claims.

### BRIEF DESCRIPTION OF THE DRAWINGS

The accompanying drawings, which are incorporated in and form a part of this specification, illustrate embodiments of the disclosure:
Figure 1A-1F show cross-sectional profiles of various through-holes as described herein.
Figure 2A-2E show cross-sectional profiles of various connectors as described herein.
Figure 3 illustrates an arrangement of fabricating a snap-on dental aligner.
Figure 4 illustrates a system diagram for fabricating a snap-on dental aligner.
Figure 5 is a flow chart for fabricating a set of connected dental aligners for a dental treatment in accordance with the present invention.
Figure 6 illustrates the side view of a conventional dental aligner newly worn on a subject's tooth.
Figure 7 shows the side view of a conventional dental aligner worn on a subject's tooth after a period of usage.
Figure 8 illustrates the top views of a conventional dental aligner when it is newly worn and after it is worn for a period of time.
Figure 9 illustrates a cross-sectional view of a snap-on dental aligner.
Figure 10 is a flow chart for providing orthodontic treatment using a removable multi-layer dental aligner.
Figure 11 illustrates a tooth model having registration features.
Figure 12 is a top view of a dental base comprising a plurality of sockets for receiving pins affixed on the physical tooth models.
Figure 13 illustrates the fabrication of the first layer of a multi-layer dental aligner.
Figure 14 illustrates the fabrication of the second layer of a multi-layer dental aligner.
Figure 15 is a top view of a multi-layer dental aligner.
Figure 16 is a view of another aligner.
Figure 17 is a cross-sectional view of a multi-layer or non-uniform dental aligner worn on a patient's tooth.
Figure 18 illustrates an orthodontic process for using a dental aligner comprising a fluid-permeable material.
Figure 19a illustrates the side view of a new conventional dental aligner worn a patient's tooth.
Figure 19b shows the side view of a conventional dental aligner worn after a period of usage.
Figure 20 illustrates the top views of a conventional dental aligner when it is newly worn and after it is worn for a period of time.
Figure 21 illustrates a process for producing a disposable dental aligner.
Figure 22 is a flow chart for producing a physical aligner in accordance with the present invention.
Figure 23 illustrates the smoothening of the digital aligner model in preparation for a CNC based manufacturing of physical aligner in accordance with the present invention.
Figure 24 illustrates the segmentation of digital aligner model into segmented components suitable for CNC based manufacturing in accordance with the present invention.
Figures 25a-25d illustrate the segmentation of an inter-proximal region by removing a space around the inter-proximal region and replacing it by a wedge.
Figures 26a-26d illustrates aligner components comprising features that allow them to assemble to form an aligner.
Figure 27 illustrates an aligner assembled from a plurality of aligner components each comprising features that assist the assembling.
Figure 28 illustrates an arrangement of the wrinkles on aligners.
Figure 29 illustrates the fabrication of a wrinkled aligner from a sheet of aligner material.
Figure 30 illustrates the process of designing and fabrication of the wrinkled dental aligners.
Figure 31a shows a cross-section of one variation of a lateral correction aligner on a dental arch. The same dental aligner is shown in Figure 31b without the dental arch.
Figure 32a shows a perspective view of one variation of a lateral correction aligner as described herein on a dental arch. Figure 32b shows another perspective view of a lateral correction aligner.
Figure 33a shows a cross section of one variation of a lateral dental aligner. Figure 33b shows an expanded view of a region of the lateral dental aligner shown in Figure 33a.

### DESCRIPTION OF INVENTION

Dental appliances are described herein. In general, dental appliances (e.g., dental aligners) are devices which may be worn on a subject's teeth, gingiva or other region of the oral cavity. Dental appliances are typically used to treat malocclusion. Dental appliances may include features which enhance the performance of the appliance. The dental appliances described herein may include features for preventing damage or wear on the appliance (e.g., fluid-permeability, wrinkled structure, modular construction, and varying thickness, stiffness, etc.). The dental appliance may also include features for enhancing the fit of the appliance, (e.g., snap-on features, through-holes, textured surfaces, etc.).

The following description is presented to enable any person of ordinary skill in the art to make and use the invention. Descriptions of specific materials, techniques, and applications are provided only as examples. Various modifications to the examples described herein will be readily apparent to those of ordinary skill in the art without departing from the scope of the present invention as defined in the appended claims.

As used herein, the term "dental aligner" refers to a dental device or appliance for rendering corrective teeth movement or for correcting malocclusion. An orthodontic treatment usually includes plurality of treatment steps. One or more dental aligners can be worn on the subject's teeth at each treatment step. The orthodontist first determines the initial configurations of the subject's teeth and decides target final configurations for the subject's teeth at the end of the treatment. One or more dental aligners can then be produced so that a subject wearing the dental aligners will gradually have his or her teeth repositioned by the dental aligner "pushing" (or pulling) against the teeth, or gums (gingiva).

As used herein a "subject" may be any subject who may benefit from the use of a snap-on aligner, including orthodontic patients.

Individual dental aligner appliances generally cover some (or all) of a subject's teeth and may extend to the gums (or other regions of the oral cavity, including the roof of the mouth). In some variations, a dental aligner may comprise a polymeric shell having a teeth-receiving cavity formed therein. The dental aligner may be formed by molding. Each individual appliance may be configured so that its tooth-receiving cavity has a geometry corresponding to an intermediate or end tooth arrangement intended for that appliance. That is, when an appliance is first worn by the subject, certain of the teeth will be misaligned relative to an un-deformed geometry of the appliance cavity. The appliance, however, is sufficiently resilient to accommodate or conform to the misaligned teeth, and may apply sufficient resilient force against such misaligned teeth to reposition the teeth to the intermediate or end arrangement desired for that treatment step. Examples of dental aligners, as well as additional description, may be found in the figures described below, as well as in the documents cited in the present description.

The portion of the dental aligner covering the teeth may be referred to as the shell region of the dental aligner. The shell region typically has an inner (e.g., teeth-contacting) surface and an outer surface (opposite to the inner surface). The dental aligner may also be considered to have a tip region (e.g., near the crown of the teeth on which the aligner is worn) and a bottom portion, which may sit near the gums (or gingival) when the aligner is worn on the teeth. Side regions may be identified between the tip region and the bottom region (e.g., and inner side region facing the tongue, and an outer side region facing the lips).

The dental aligners described herein may further include any or all of the features described below (e.g., snap-on dental aligners, textured, wrinkled, modular, or varying thickness, stiffness or other properties) which may be incorporated as part of a dental aligner, individually or in any reasonable combination. For purposes of descriptive convenience only, individual dental aligners are described or illustrated to in the sections that follow to individually emphasize features or aspects of the dental aligners described herein. This arrangement is not intended to be limiting or to imply that the aligners, system, and methods of making or using these aligners are restricted to the examples shown or described.

Dental aligners may incorporate features that assist in securing the dental aligner to a subject's teeth, including connectors and through-holes and textured contact surfaces.

### Manufacturing a Dental Aligner

Dental aligners maybe fabricated from a digital or actual (e.g., physical) model of a subject's dental arch. The subject's current dental arch is modified to represent a target dental arch (or a series of target dental arches) my incrementally moving the teeth from their current position towards the intended position. Typically, a dental aligner is made by forming an aligner to fit the model of the dental arch that is incrementally different from the current dental arch. Thus, the dental aligner provides force to help correct malocclusions of teeth. In forming the aligner from the model of the dental arch (either digital or actual), it may be beneficial to smooth the model of the teeth, so that the aligner accurately conforms to the dental arch, but does not include surfaces corresponding to sharp edges or spaces which may interfere with the comfort and effectiveness of the aligner.

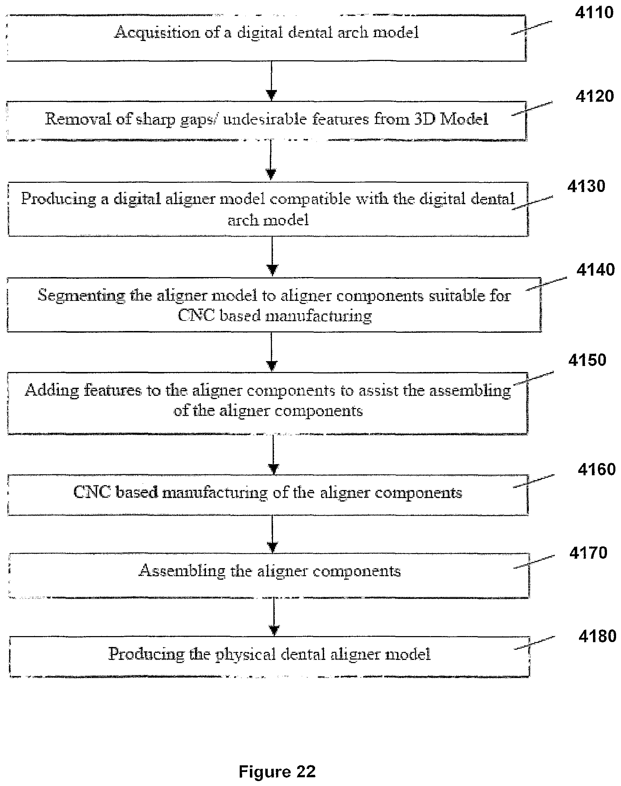

Figure 22 illustrates one variation of a process of producing a dental aligner as described herein. First, a three dimensional (3D) digital dental arch model is acquired from a patient's arch in step 4110. The digital dental arch model can be obtained by 3D scanning of a cast produced from the patient's arch. The digital model includes a mesh of points in three dimensions that define the surfaces of an entire or a large portion of an upper or lower arch. Details of obtaining a digital model of an arch are disclosed in above referenced US Patent Application titled "Producing a base for a physical dental arch model" by Huafeng Wen, filed 12/14/2004.

Next, in step 4120, the digital dental arch model is smoothened by computer processing using computer software. One or more criteria for the degree of smoothness can also be provided by a user. Undesirable features such as sharp edges, gaps, and divots are removed from the digital dental arch model. When a physical model alone is used, the edges may be manually smoothed, and gaps may be filled in (e.g., using wax, etc.).

The degree of smoothness that is required may depend upon the specific dental application. For example, plastic aligners cannot reach into the gaps between the teeth, and therefore these gaps may be filled in when forming the aligner. In addition, it is also undesirable to have aligner to have fine features inside the gaps because that could potentially create resistance to desired tooth movement in an orthodontics treatment procedure.

The criteria for the degree of smoothness can also be determined by the type of tools used to manufacture the aligner components, as described below. For example, Computer Numerical Control (CNC) based manufacturing refers to the automated and computer controlled machining. A CNC machine typically provides automatic, precise, and consistent motion control. All forms of CNC equipment have two or more directions of motion, called axes. These axes can be precisely and automatically positioned along their lengths of travel. The two most common axis types are linear (driven along a straight path) and rotary (driven along a circular path). Instead of causing motion by manually turning cranks and hand wheels as is required on conventional machine tools, CNC machines allow motions to be actuated by servomotors under control of the CNC, and guided by the part program. Generally speaking, the motion type (rapid, linear, and circular), the axes to move, the amount of motion and the motion rate (feed rate) are programmable with almost all CNC machine tools. In the present invention, in addition to CNC based milling, the CNC based manufacturing is also compatible with other computer numerical controlled manufacturing processes such as stereolithography, laser machining, molding as well as other types of CNC based machining.

For manufacturing a physical dental arch model, however, the drill bit in CNC based milling is usually too big to reach into the gaps and holes in a dental arch model. CNC milling is usually around one axis, which makes it difficult to machine the complex shapes within the gaps between teeth. CNC based milling also has limitations in accuracy and repeatability between different stages of milling.

Several techniques may be used to remove the gaps in the digital dental arch model to produce a smoothened digital dental arch model. These techniques include:
(1.) Boolean union with primitive 3D objects. Graphics Constructive Solid Geometry primitives or self developed predefined geometries can be inserted into the gaps in the digital dental arch model and then combine with the original 3D digital mesh.
(2.) Extrusion. The surfaces near the gaps are extruded to fill the gaps in the original 3D digital mesh.
(3.) Geometry modification by moving vertices. Sharp gaps can be closed by specifying the desired boundaries and modifying the mesh to the desired boundaries in the problem regions.
(4.) Subdivision of surfaces and movement. Similar to Technique 3, the dental arch surfaces are subdivided in the regions of surface modification for greater smoothness and continuity.
(5.) Convex hull creation of sub parts to be used as filling objects in the gaps. The gap regions are first located and the points defining edges of the sharp gaps are identified. A convex hull is computed based on these points. The convex hull is joined with the original mesh to fill the gaps using Boolean union.
(6.) Using parametric surfaces to model fill objects that will be used fit in the gaps.

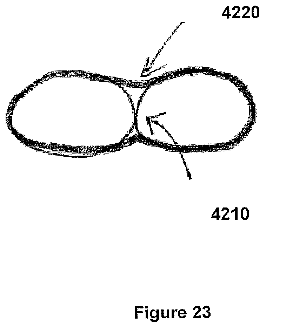

Figure 23 illustrates the smoothening effects of the gap filling by comparing the surfaces 4210 of before gap fillings and the surfaces 4220 after the gap fillings.

A simulation can be conducted using the smoothened the digital dental arch model as input to check and verify the smoothness of the digital dental arch model. The simulation can be run using simulator software in response to the smoothness criteria required by the manufacturing process such as CNC based milling or the dental applications. Refinement ad smoothening iterations may be called for if the smoothness criteria are not completely satisfied.

Once the dental arch model is smoothed, an aligner model may be developed based on the smoothed dental arch model (e.g., a digital arch model). For example a smoothed digital arch model may be used to develop a digital aligner model, as shown in Fig. 22, Step 4130. The digital aligner model typically comprises an inner surface and an outer surface. Since the inner surface(s) of the aligner will be in contact with the outer surface of the patient's teeth (and sometimes gingiva), the inner surfaces of the digital aligner model may approximately follow the contours of the outer surface of the digital dental arch model, so that the dental aligner will fit (e.g., snap) onto the arch. Moreover, the inner and outer surfaces of digital aligner may be designed to various shapes and thickness that may apply the desired forces in order to achieve the movement of the teeth in accordance with a treatment plan.

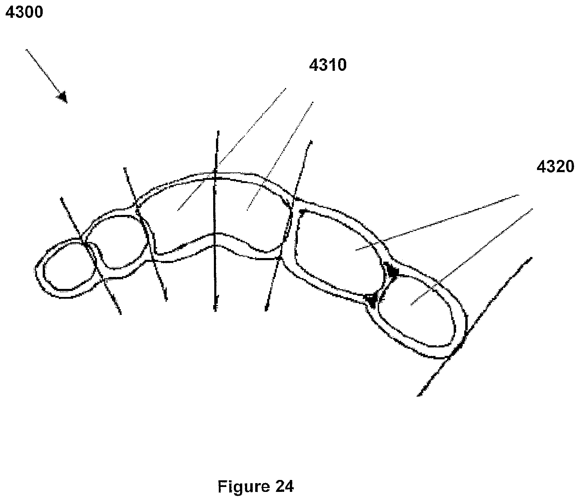

In the method outlined in Figure 22, the digital aligner is next divided into smaller components that may be easily manufactured (e.g., by CNC techniques) and reassembled to form a final aligner. In Step 4140, the digital aligner model is segmented into digital aligner components suitable for CNC manufacturing. A typical aligner in the digital aligner model includes an upper or lower aligner respectively for the upper and lower arch or a portion of an arch comprising a plurality of teeth. An aligner 4300 is shown in Figure 24. The aligner components 4310, 4320 can correspond to a portion or region of a dental arch model (e.g., a portion of a tooth, a whole individual tooth, or sometimes a segment of arch including several teeth).

The criteria for the size, location, and the number of aligner components are based on both orthodontic needs and manufacturing requirements. The orthodontic criteria require the tracking of how the original locations of the aligner components and which components can be moved together as a group, which aligner components must be moved independently, and which teeth cannot be moved.

The manufacturing requirements relate mainly to the manufacturability of the digital aligner components, which usually supersedes the orthodontic criteria. For example, a single tooth can be divided into multiple components to make its model manufacturable. The segmented digital components can be evaluated by a simulation software to verify their manufacturability by a specific manufacture process such as CNC based milling, which may suggest refinement in the size, location, and numbers of the segmentation. The simulation can also include an evaluation and estimation of the physical strength after the assembly, as described below, to determine if the assembled aligner components are strong enough to withstand the physical forces in a pressure forming process.

In one variation, a digital aligner model can be smoothened during the segmentation. Different segmented digital components may receive different types or degree of smoothening so that the smoothening is tailored to the segments and manufacturing requirements.

By the method described in Figure 22, an aligner model can be segmented to small, manufacturable aligner components that can be manufactured by automated, precise numerical manufacturing techniques. The manufacturability of the digital components may be simulated, verified and refined if necessary prior to manufacturing. As a result, complex aligner shapes that cannot be made can now be practically manufactured. Waste and cycle times are reduced in the process from design, testing, pilot, to production.

After designing the segmented aligner and manufacturing the segments, the segments may be assembled to form a complete aligner. For example, in step 4150, one or more features are added to the aligner components to assist the assembling of the aligner components to form an aligner. These features may include a pin, a registration slot, a notch, a protrusion, a hole, an interlocking mechanism, a socket, a jig, and a pluggable or an attachable feature. The adjacent manufactured aligner components may include matching male (e.g. mushroom, push pins) and female features (e.g. hole, notches etc.) for attachment. The male and female features can be fabricated for example by casting mold that include female and male matching features in the mold, each responsible for making respective male and female features. The adjacent aligner components can be attached together by simply pushing male feature into the female feature, for example, by pressing a pushpin into a receiving hole. In some variations, the segments may be secured together by an additional step (e.g., by an adhesive, sintering, etc.)

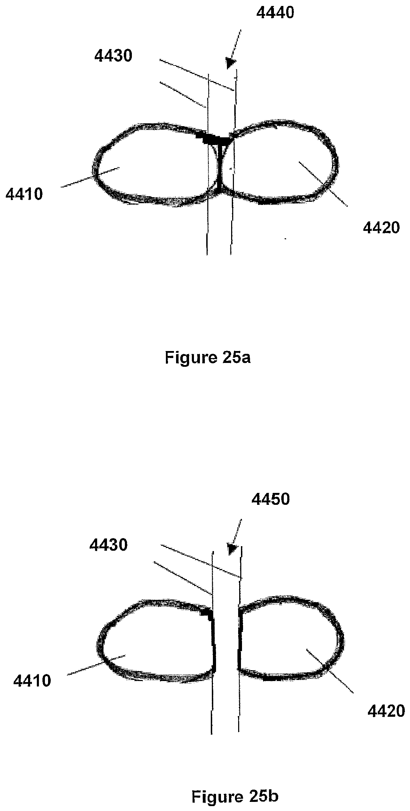

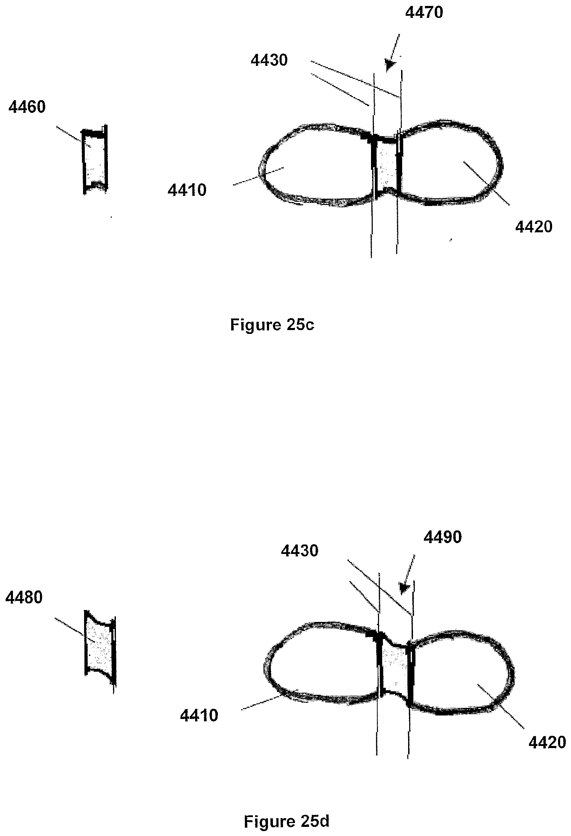

Special care may be applied to the inter-proximal regions when segmenting the arch into digital components. For example, the inter-proximal regions may involve complexity and details so that CNC based manufacturing techniques (such as cutting or milling) can result in losing details. As shown in Figures 25a and 25b, an inter-proximal region 4440 may be removed between a tooth model 4410 and a tooth model 4420 along the lines 4430. This can be achieved by data processing over the digital dental arch model. A thin gap 4450 may be formed between tooth model 4410 and tooth model 4420. A wedge 4460, shown in Figure 25c, can then be made using CNC based manufacturing technique similar to other manufacturable digital components. The wedge 4470 can be inserted into the gap 4450 to complete the digital tooth arch model. The wedge making and insertion can take into account of the movement of the tooth models 4410, 4420 during the orthodontic treatment. As shown Figure 25d, the wedge 4480 may be made to be slightly sheared. The wedge 4490 inserted between the tooth models 4410, 4420 can therefore induce a relative movement between the tooth models 4410, 4420. In general the relative movement can include translational and directional adjustment in different degrees of freedoms. The resulted tooth arch model can then be used to made dental aligners.

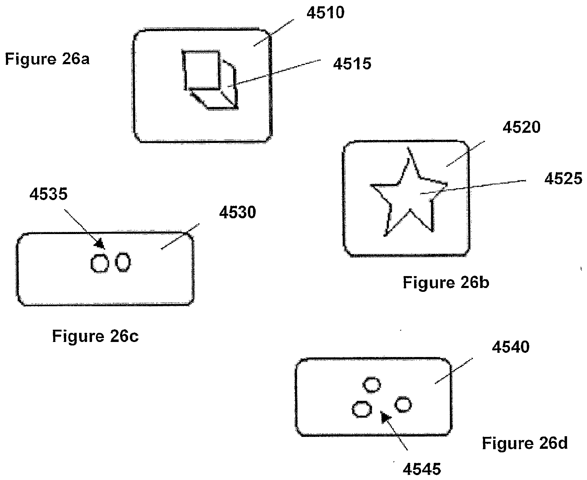

Figures 26a, 26b, 26c and 26d illustrate examples of the features 4515, 4525, 4535, 4545 in the aligner components 4510, 4520, 4530, 4540 that may allow the aligner components 4510, 4520, 4530, 4540 to be attached to each other to form a whole or part of a physical aligner. Figure 26a shows a feature 4515 having a cubic base for an aligner component 4510. Figure 26b shows a feature 4525 having a star-shaped base for an aligner component 4520. The star-shaped base defines unique orientation when aligner component 4520 is assembled with another aligner component. Figures 26c and 26d show features 4535 and 4545 respectively comprising two and three pins in the aligner components 4530 and 4540. The two pins ensure uniquely defined orientation when aligner component 4530 is assembled with another aligner component. Similarly, the three pins in feature 4545 ensure unique configuration when aligner component 4540 is assembled with another aligner component.

The aligner components 4310, 4320 are manufactured in Step 4160 using CNC based manufacturing techniques. The segmented digital aligner components are provided to as CNC objects input to a CNC machine. The aligner components 4310, 4320 are manufactured individually. In the disclosed methods and systems, the precision and yield of the CNC based manufacturing are high because manufacturability has been considered and verified as part of the designs of the aligner components. Common materials for the aligner components include polymers, urethane, epoxy, plastics, plaster, stone, clay, acrylic, metals, wood, paper, ceramics, and porcelain. A mechanism may be required to hold the components in place during the milling process.

As described in more detail below, the digital dental aligner model can include wrinkle features to be produced on the aligner components and finally formed on the surfaces of the physical dental aligner. The wrinkle features can be pre-designed and simulated to reduce the relaxation of the aligner after repeated use. The wrinkled aligner or aligner components can be fabricated in accordance with the digital dental aligner model.

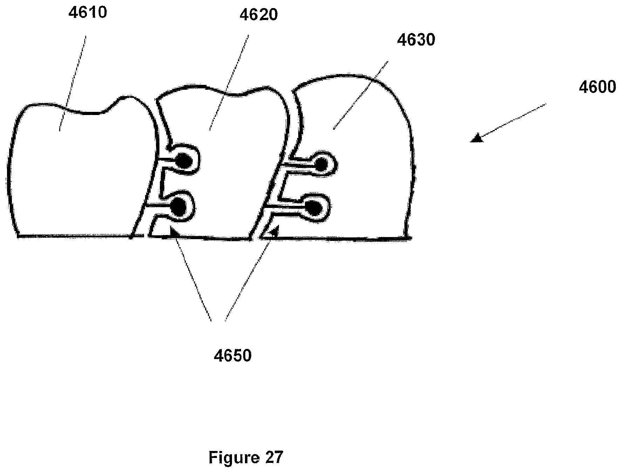

The physical aligner model 4600 is assembled in Step 4170 by assembling the aligner components. Figure 27 illustrates one example of how aligner components 4610, 4520, 4530 can be assembled to form a whole or a portion of a physical aligner model 4600. The different aligner components 4610, 4620, 4630 can be attached or plugged into each other at joining features 650 that can be pins, registration slot, a notch, etc.

The physical aligners can be used in different dental applications such as dental crown, dental bridge, dental retainer, mouth guard and teeth whitening. For aligner fabrication, for example, each stage of the teeth treatment may correspond to a unique physical aligner model. Aligners can be fabricated based on the digital dental arch model as the teeth movement progresses during the treatment. At each stage of the treatment, the desirable teeth positions for the next stage are calculated. A physical aligner model is fabricated using the process described above for modifying teeth positions in Step 4180.

The methods and system for forming an aligner described herein may allow variable shape and thickness in the aligner designs as compared to other systems. Moreover, the disclosed methods and system provides a wider range of aligner material selections. Analyses over aligner shape can be conducted done to ensure the optimal shape of aligner to be produced to achieve the desired movements at each stage of the orthodontic treatment. In addition, aligners having optimized shapes can achieve certain movements that the prior art cannot achieve. Thus, aligners can be made thinner and more cosmetic, allowing more comfort in wearing. The manufacturing process may be easier and more consistent.

Aligner components can also be labeled with unique identification marks, and be assembled and detached in predetermined sequences. The assembling and detachment can also be readily automated (for example by a robotic arm under the control of a computer) in accordance with the predetermined sequences.

The aligner components may also be assembled by pressure forming. The aligner components may be hollow, and have outer surfaces that match the digital aligner components to allow proper union of the aligner components. The aligner components may also be pre-fabricated to interlock (e.g., similar to LEGO™ blocks). The surfaces of the aligner components may include standard registration and attaching features for them to join together. The interlocking aligner components could also be assembled automatically by robotic arms under computer control. The aligner components can be separated and repaired after the assembly. The attaching features between aligner components allow the components to be detached in a sequence. Broken components could be removed, repaired or replaced, followed by re-assembling.

### Snap-on Dental Aligners

In general, Snap-on dental aligners comprise one or more through-holes (or passages) through a wall of the dental aligner so that the dental aligner may be secured to the teeth of a user. For convenience, the snap-on dental aligners described herein may be referred to as aligners (or dental aligners).

Generally, the snap-on dental aligners described herein also comprise one or more through-holes for a connector to pass through, to secure the aligner to a subject's teeth, to help maintain the shape of the aligner, or to direct force against a subject's teeth. Various types of through-holes and connectors may be used. In addition to serving as attachment sites, through-holes may also allow the gums to "breath" by providing passages in the aligner though which gases and fluids can be exchanged.

### Through-holes

Any appropriate dental aligner may be used as a snap-on dental aligner, having one or more through-holes for mating with one or more connectors. Furthermore, the through-hole may be any appropriate through-hole that is adequate to secure the aligner to a subject's teeth, or to help maintain the shape of the aligner, or to direct forces to realign a subject's teeth. Through-holes may form passages extending the thickness of a dental aligner (e.g., from the inner surface of the dental aligner to the outer surface of the dental aligner). Through-holes may be engaged by a connector. A through-hole may also be referred to as a "window" or a passage. Thus, the through-hole forms a window or passage through the aligner, potentially providing access to the teeth and gingiva.

Any number of through-holes may be formed in an individual aligner. One or more through-holes may be used. In some variations, only one through-hole is used. In some variations, one through-hole is used per tooth covered by the aligner. The number of through-holes may be chosen or selected based on individual subject criterion (e.g., based on the force to be applied to move the teeth, the shape of the subject's teeth, and/or the arrangement of the subject's teeth). An orthodontist or other health profession may select the number of holes to be formed on an individual aligner. The number of holes may also depend upon the material used to form the aligner. More through-holes may be formed when the material is more likely to deform with use or age. In some variations, more than one through-hole may be formed for individual teeth covered by the aligner. For example, a pair of symmetrically-located through-holes may be formed on the aligner.

The number of through-holes may correspond to the number of connectors. Generally, for each connector to be attached to a subject's tooth, there is a corresponding through-hole on the subject-specific aligner. However, an aligner may have more through-holes than connectors. Thus, there may be redundant through-holes, in the event that a connector becomes disengaged, removed, or never used.

In general, through-holes may be located anywhere on the aligner. For example, through-holes may be located on the bottom region (on either or both sides of a tooth), or may be located on the sides of the aligner, or may be located on the tip region of the aligner. The location may be chosen so that the aligner applies a desired force to the subject's teeth. Thus, through-holes may be more closely located together when the aligner is more likely to slide or become dislodged because of the forces between the teeth and the aligner. Similarly, it may be beneficial to have through-holes near the ends of an aligner to aid in securing the aligner to the teeth.

Thorough-holes may be of any configuration to effectively engage connectors attached to the teeth. Thus, through-holes may have a diameter that is complementary to the shape and size of the connectors to which the aligner with mate. In some variations, the through-holes are sized differently from the connectors for ease of use. For example, all, or a portion, of a through-hole may be larger in diameter than the diameter of a connector so that the connector can easily engage the through-hole. The through-hole may have a constant diameter, or a variable diameter. In one variation, the through-hole may have a wide opening that tapers in to a smaller diameter as it passes from the inner surface to the outer surface of the aligner. In one variation, the through-hole has a larger diameter within the middle of the passage or at the outer portion of the passage. A thorough-hole may also have a smaller diameter than a connector. In some variations, when the connector engages a through-hole having a smaller diameter, the through-hole may expand, and help hold the connector engaged.

The through-hole may have any appropriate profile. For example, the cross-sectional profile (transecting between the inner and outer surfaces of the device), may be round, polygonal (e.g., triangular, square, asymmetric, etc.). In one variation, the through-hole is a slit cut through the aligner which remains closed until a connector is inserted. The longitudinal profile of the through-hole may also be any appropriate shape. For example, the longitudinal profile may conform to the longitudinal shape of the connector. Thus, if the connector has a knobbed region, the longitudinal profile may include a cavity into which the knob may fit.

The through-hole may also be formed so as to secure the connector. Thus, the through-hole may be (or may have a region that is) slightly smaller than the profile of the connector. In some variations, the through-hole has a longitudinal profile that is jagged, or edged. For example, the through-hole may have an accordion-type profile. Such edges may mate with edges on the connector. The through-hole may have directional surfaces, such as edges which point in a direction (e.g., from the inner surface to the outer surface) so that a connector may easily engage a through-hole, but less easily withdraw. In one variation, the through-hole includes a rim having a narrower diameter than a region of the connector. Thus, when the connector must "snap" past the rim within the through-hole, and may be locked into position.

An additional locking or securing device may be accommodated within the through-hole. For example, the through-hole may accommodate a pin, washer, gasket, or other locking or securing device for holding the connector within the through-hole.

The through-hole may also be reinforced. Thus, the through-hole may include additional structures to prevent damage to the through-hole, aligner or connector. For example, the through-hole may include a rim or edge where it exits the outer surface of the aligner.

As described, the through-hole may be any appropriate size. For example, the through-hole may have a diameter that is between 0.005 and 1 mm, or between 0.01 mm and 0.5 mm or between 0.1 mm and 1 mm, or between .001 mm and 0.1 mm.

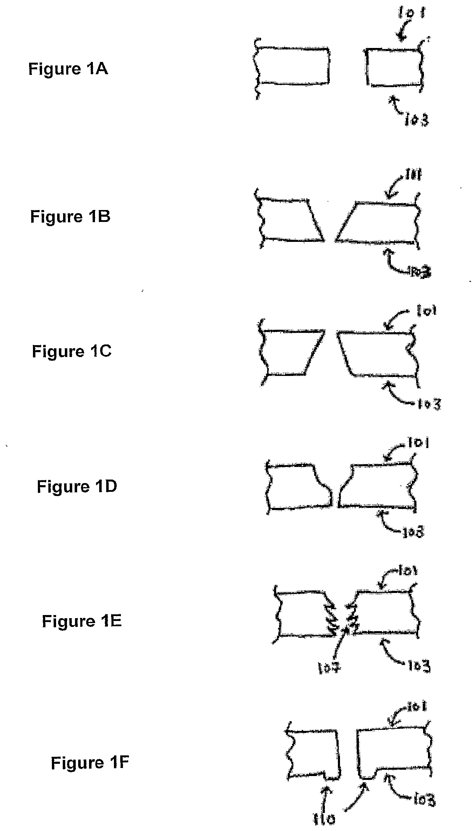

Figure 1 illustrates additional profiles of through-holes that may be used. Fig. 1A shows a cross-section of a through-hole having a circular profile with a uniform diameter through the length of the through-hole. In all of Figures 1A-1F, the inner surface 101 is shown at the top of the profile and the outer surface 103 is shown at the bottom of the profile. Generally, a connector attached to a tooth enters the through-hole from the inner surface (closest to the teeth). Figure 1B shows a through-hole that with a large opening at the inner surface 101, which gradually tapers into a narrower opening. Figure 1C shows a through-hole with a smaller opening on the inner surface 101 that gradually enlarges to a larger opening on the outer surface 103. In Figure 1D, the through-hole also narrows from a large opening on the inner surface 101 to a small opening in a non-linear fashion. Alternatively, the through-hole may also expand from a narrow opening to a larger opening in a non-linear way (not shown). In any of embodiment of the through-hole, the change from the outer or inner surface may be gradual, rather than sharp. For example, the edges may be rounded or smoothed, which may prevent irritation, and may aid in engaging the connector.

Figure 1E shows one variation of a locking through-hole, having multiple ridges 107 which may engage one or more surfaces of the connector to inhibit withdrawal of the connector once it has engaged the through-hole. In Fig. 1E, the ridges 107 are directed from the inner surface 101 towards the outer surface 103. Although four ridges are shown in Figure 1E, any number of ridges (include a single ridge) of any shape or size may be used. Furthermore, "spikes" or pins may also be used, rather than symmetric ridges (or asymmetric ridges). Figure 1F shows a through-hole reinforced with a lip or rim 110, as described above.

The through-hole may also comprise additional materials. For example, the through-hole may be coated or lined in order to enhance the interaction (e.g., contact) with a connector, or to provide therapeutic benefit. In one variation, the through-hole is reinforced with another material (e.g., a stiff material such as a polymer, metal, ceramic, or some combination thereof). In one variation, the through-hole is coated or filled with a material to help secure the connector. For example, the through-hole may be coated with an adhesive. In one variation, the through-hole is filled with a material to maintain the shape of the through-hole until the connector is engaged with the through-hole. For example, the through-hole may have a "plug" that is pushed from the through-hole by the connector when the connector engages the through-hole. In some variations, the through-hole is coated with a lubricant.

Although Figure 1 shows through-holes having profiles that are perpendicular to the inner and outer surfaces, the through-hole may be present in any appropriate angle to the inner and/or outer surfaces. For example, the through-hole may be angled so that the exit from the outer side of the aligner is offset from the entrance into the through-hole on the inner side of the aligner. Angled through-holes may also help secure the connector within the through-hole, and may further facilitate the application of force against the teeth by the aligner. In one variation, the through-hole is angled between about 30° and 60°. In one variation, the through-hole is angled approximately 45°.

The through-holes may also be configured to apply force to the connectors, and therefore to a tooth or teeth. For example, the walls of the through-hole may provide asymmetric force against the connector, which may in turn push or pull the tooth that the connector is attached to.

Different through-holes on the same aligner may be different shapes, sizes and/or orientations. The different shapes and sizes of the through-holes may also affect the strength of the attachment of the aligner to the teeth by the connector, as well as the force applied by the connector to a tooth. For example, through-holes located at the ends of the aligner may be configured to secure the aligner to the teeth, while through-holes located elsewhere on the aligner may be configured to help the aligner apply force to the teeth, or to a single tooth.

### Connectors

Any appropriate connector may be used for connecting a snap-on aligner to a subject's teeth. Connectors are generally attached to the teeth of a subject so that the aligner may be secured to the subject's teeth by engaging the through-holes on the aligner. Typical connectors may be pre-formed (e.g., shaped before being secured to the subject's teeth) or formed at the time that they are connected to the subject. Although all of the examples described below concern connectors that are attached to the subject's teeth, connectors may be attached to any appropriate region of the subject's oral cavity, including the subject's gingiva.

A connector may be any appropriate shape for engaging with through-holes in the aligner. For example, the connector may be a post, a button, a bump, a nodule, a node, a protrusion, or the like. The connector may be shaped or sized to complement or conform to the through-holes as described above. The connector may be ridged, tubular, bulbous, or irregularly shaped. In some variations, the connector is asymmetrically shaped. In some variations, the connector comprises an orientation, so that it engages the through-hole in a particular orientation, which may prevent undesirable movement (e.g., loosening or shifting) of the connector within the through-hole. The connector may comprise any appropriate profile. For example, the cross-sectional profile may be round, polygonal (e.g., triangular, square, asymmetric, etc.), etc.

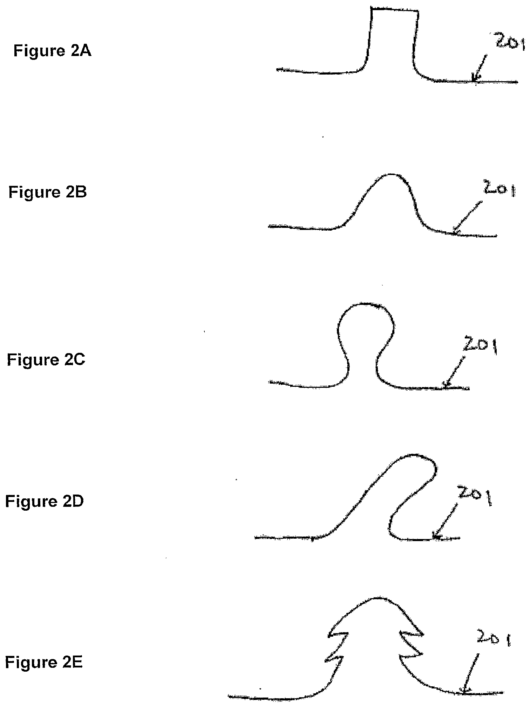

Figure 2 illustrates profiles of different connectors. In Figure 2A, the connector profile is a peg or box shape. In Figures 2A-2E the connector is shown attached to a subject's tooth 201. Figure 2B shows a profile of a connector that is a smooth "bump" or node. The connector generally projects from the surface of the tooth, and may project far enough so that it extends beyond the outer surface of the aligner (or is flush with the outer surface of the aligner) when it is engaged with the through-hole of the aligner. In one variation, the connector extends past the outer surface of the aligner so that an edge of the connector rest on the outer edge of the aligner. In one variation, the connector does not extend out of the through-hole.

Figure 2C shows a connector with a bulbous end (e.g., a button shaped end). The connector protrudes from the tooth on a base that is slightly narrower than the upper portion of the connector. As described for the through-holes, the connectors may also be angled in any appropriate fashion. For example, a connector may project from the surface of a tooth at a 30° angle, a 40° angle, a 45° angle, a 50° angle, a 60° angle, or an angle between 30° and 60°. Figure 2D shows a connector that is angled at approximately 45° from the surface of the tooth 201.

Connectors may also comprise hooks, or other anchors. For example, the sides or the end of a connector may include a hook (or ridge) for securing within the through-hole of the aligner, as shown in Figure 2E. In many instances it may be beneficial to have connectors that do not irritate or harm the subject to which the connectors are attached. Thus, the connector may be blunt (or blunted). In some variations, the end of the connector is blunt.

Connectors may also comprise additional sites for connection to anchors or to devices that may otherwise assist in moving or applying force to the teeth. For example, an elastic, rubber band, or other tensioning device may attached the connector and/or to another connector or to the aligner. A tensioning device such as an elastic band could be attached to a connector for bicuspid extraction and class II correction, for example. Thus, the tensioning device would provide additional force to move the teeth. In one variation, an anchor may also be applied to a connector after it has passed through the through-hole of the aligner to secure the aligner into position. For example, as gasket (e.g., a rubber band) may also be used as an anchor (or part of an anchor). A rubber band may be linked between two connectors on two different teeth to act both as a tensioning device (applying force to move the teeth) and as an anchor. Any appropriate anchor or tensioning device may be used. In some variations, the dental aligner may include buttons that are part of the aligner but not attached directly to the teeth. These buttons may be used to attach tensioning devices (e.g., rubber bands, etc.) on the same aligner or between an upper and lower aligner.

A connector may be any appropriate size or diameter for engaging with a though-hole. For example, the connector may have a diameter that is between 0.005 and 1 mm, or between 0.01 mm and 0.5 mm or between 0.1 mm and 1 mm, or between .001 mm and 0.1 mm. Furthermore, any appropriate number of connectors may be used to connect to an aligner, and thus may be secured to (or fixed to) the subject's teeth. For example, the subject may have one, two, or more connectors secured to his or her teeth to engage the through-holes of an aligner.

Connectors may be positioned on the teeth in any appropriate location or locations to engage an aligner. In some variations, the location of the connectors on the subject's teeth may be determined by an orthodontist or physician. For example, the orthodontist may determine how the connectors should be located to best secure the aligner, and/or to best apply force to the teeth. The connectors may be secured to the subject's teeth before or after the through-holes have been formed in the aligner.

Any appropriate material may be used to form the connector. For example, the connector may comprise a resin, an epoxy, a cement, a polymer, a metal, a ceramic, or any combination thereof. The connector may be formed of a biocompatible material, or a bio-inert material. The connector may also comprise a material which is similar in color and/or texture to a subject's dental enamel. In one variation, the connector is secured to the subject's teeth using the same material that forms the connector itself. For example, the connector may comprise a UV cross-linkable material that may be molded into the shape of a connector and hardened (polymerized) using UV light to form the connector as part of the same step that the connector is attached to the subject's teeth. The connectors may also be attached as part of a separate step. Mechanical or chemical attachments may be used. For example, the connectors may be attached by screws, cements, etc. The shape of the connector may be adapted to help secure the connector to the teeth. For example, the connector may have a rough edge surface for bonding to the surface of a tooth.

As described above, connectors may be pre-formed, or formed at the time of attachment. In one variation, a template is used to position and form the connectors on the subject's teeth. A template may be similar to an aligner (and may be produced by a similar process). In one version, the template is a snap-on aligner, having through-holes. The template fits onto the patients teeth, and may include gaps or openings (negative spaces) where the connectors are to be located. The negative spaces may also be shaped like the connectors. A cross-linkable material (e.g., polymer) may be loaded into these negative spaces. The template containing the cross-linkable material may them be treated so that the material in the negative spaces is cured (cross-linked), forming the connectors, and simultaneously, bonding them to the surface of the teeth. For example, the cross-linkable material may comprise a UV cross-linkable polymer.

### Making or Manufacturing a Snap-On Aligner

A snap-on aligner as described herein may be fabricated by making holes in a dental aligner that may correspond to connectors on the subject's teeth. Any appropriate method of fabricating the snap-on aligner (including making the holes) may be used.

In general, a guide is used to indicate where on an aligner the through-hole(s) should be positioned. The guide may be created by the orthodontist or doctor to indicate where to position the through-holes and/or connectors. The guide may be a manual guide (e.g., a diagram), or a computerized guide (e.g., a computer or computerized device for storing the locations). The guide may indicate the location based on a relative coordinate system. For example, the guide may indicate position based on fiduciary marks that correspond to positions of the aligner. Thus, the guide may comprise a computer to store the desired positions of the through-holes on the aligner. In some variations, the computer may be used to control the process of making the guide holes as well (e.g., by controlling a hole driller, and/or a positioner). In some variations, the computer may be used to calculate the desired number and/or position of the through-holes or connectors. computer may also be used to assist an orthodontist and/or physician in locating the through-holes and/or connectors. For example, the computer may draw, plot, or calculate the result of different positions of through-holes/connectors on the teeth.

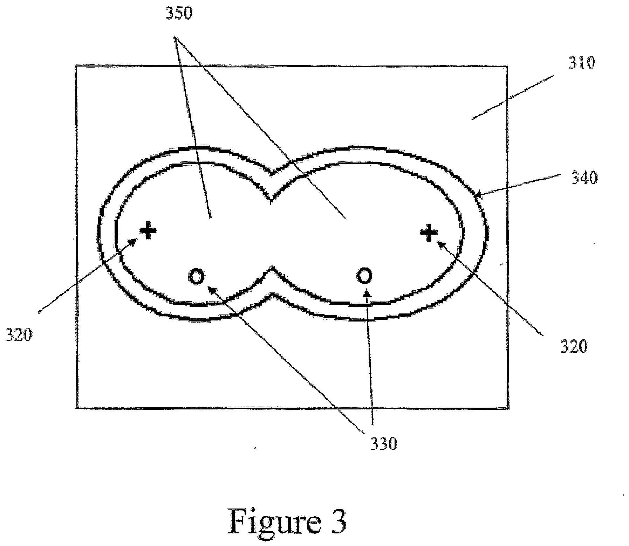

Figure 3 illustrates an exemplified method of fabricating a snap-on dental aligner. A sheet 310 of aligner-making material is attached to a sheet holder and then lifted up near a heating element. The sheet can be made of uniform distribution of a single material or comprise multiple layers of different materials. After the aligner-making material is heated by a specified time, the sheet holder is pressed on the subject's dental arch model on the base plate. A vacuum pump removes air at the bottom of the base plate to cause the softened aligner making material to relax and fittingly form around the surface the subject's dental arch model. This process of aligner making is referred to as the vacuum forming.

In one embodiment, the subject's dental arch model includes registration marks that can be copied onto the sheet 310 of aligner-making material during vacuum forming. The copied registration marks 320 are formed on the aligner 350. A digital arch model captures the shape information of the subject's tooth models and the information about the registration marks. The digital arch model further specifies the location of the connectors to be produced on the subject teeth to receive the through-holes. A digital dental aligner model is developed based on the digital arch model for moving the subject's teeth at a particular treatment step. The digital dental aligner model specifies the locations and the sizes of the through-holes 330 in the dental aligner 350 at locations that are in registration with the connectors (e.g. protrusions 530, 540) on the subject's teeth 520.

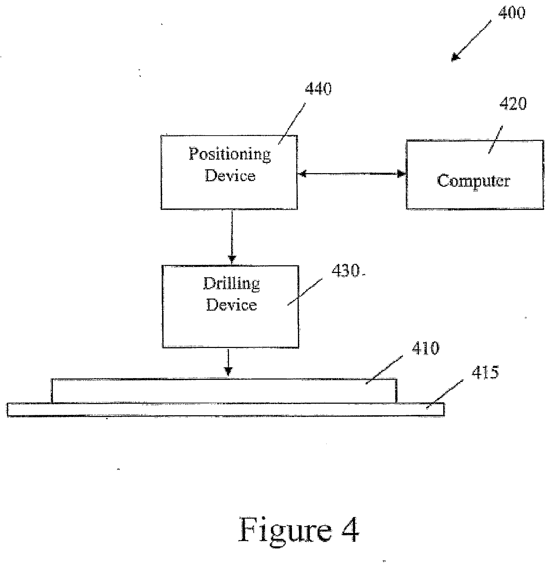

Figure 4 shows a block diagram of a system 400 for fabricating a snap-on dental aligner. An aligner 410 is held to a stage 415. A computer 420 stores the digital aligner model and the information about the through-holes 330 to be made on the aligner 410. A drilling device 430 is mounted on a two-dimensional or three-dimensional positioning system 440. The positioning system 440 first locates the copied registration marks 320 on the sheet 310 under the control of the computer 420. The positioning system 440 defines a coordinate system in reference to the copied registration marks 320. The positional system 440 then moves the drilling device 430 to the intended locations for the through-holes 330 in accordance with the digital aligner model. The through-holes 330 can then be drilled by any appropriate method, including a mechanical drill bit or a high-power laser beam. The sheet 310 of the aligner making material is then cut out along the gingival line 340 to obtain a snap-on aligner 350 that can fit to the subject teeth.

In another embodiment, the aligner 410 is mounted on a positioner rather than the drilling device 430. The positioner is capable of producing the similar relative movement between the aligner and the drilling device 430. A coordinate system is first developed using the copied registration marks. The aligner 410 is then moved to positions to allow through-holes to be drilled at the intended locations.

In one aspect, the system 400 described above can a Computer Numerical Controlled (CNC) based manufacturing system. In still another embodiment, aligner components are fabricated by CNC based manufacturing in accordance with a digital dental aligner model. Through-holes are produced also in accordance with the digital dental aligner model. The dental aligner components are subsequently assembled to produce the snap-on dental aligner.

As mentioned previously, the aligner may be fabricated with the through-holes present in the device (including fabricating by molding , CNC methods, etc.). In addition, since a subject's treatment may be re-evaluated or modified during the course of treatment, the location of the connectors (and/or through holes) may also be modified during the course of treatment.

### Using a Snap-On Dental Aligner

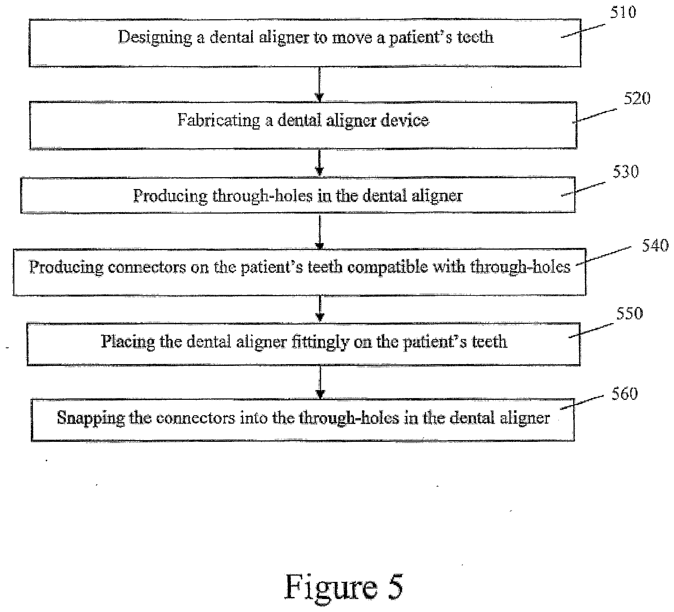

Figure 5 illustrates an example of a process of using a snap-on dental aligner in accordance with the present invention. Dental aligners are designed for each treatment step in step 510. The dental aligner device is fabricated in step 520. The fabrication techniques can include vacuum forming, milling, stereo lithography, laser machining, molding, and so on. In accordance with the present invention, through-holes are then made in the dental aligner in the dental aligner in step 530. For example, the through-holes can be drilled with a mechanical drill bit or a laser beam. Connectors are next produced on the subject's teeth to be snapped into (e.g., engaged with) the through-holes in the dental aligner in step 540. For example, the connectors can include a pre-made component that is glued to the subject's teeth by adhesives and/or UV assisted polymerization. The dental aligner having the through-holes is then fittingly placed on the subject's teeth as described in step 550. The connectors on the subject's teeth at locations are in registration with the through-holes in the dental aligner. The dental aligner is then pressed the subject's teeth the snap the connectors into the through-holes in step 560.

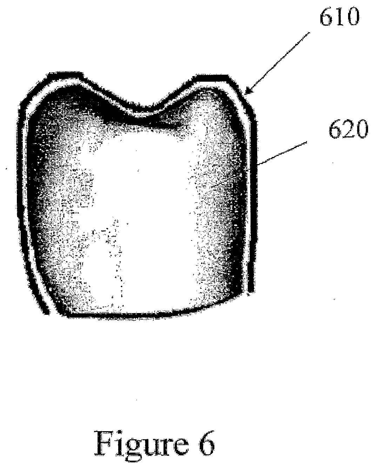

The disclosed snap-on dental aligners may help overcome the above-described aligner relaxation problem. Figure 6 illustrates a side view of a dental aligner 610 that is newly worn on a subject's tooth 620. The aligner is typically in a shell shape, comprises a shell portion, a tip portion, and a bottom portion. The inner surface of the shell portion is to be in contact with the subject's teeth. The dental aligner 610 fits properly at the bottom of the tooth where the gingival separates the tooth from the root. The newly worn aligner 610 can provide proper and effective force for the tooth movement in the orthodontic treatment.

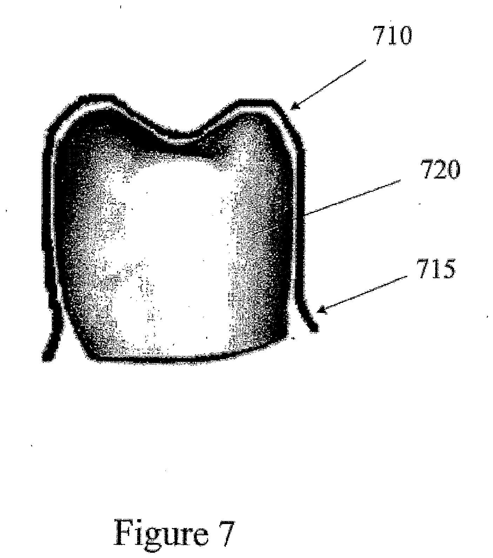

Figure 7 shows the side view of the aligner 710 that has been worn on the subject's tooth 720 after a period of usage such as a few days or a week. The lower part 715 of the dental aligner 710 is relaxed and opened up, which prevents the dental aligner 710 to exert proper stress on the bottom of the tooth. The dental aligner 710 thus can no longer produce effective and accurate tooth movement. Different parts of the dental aligner can relax similarly to different extent.

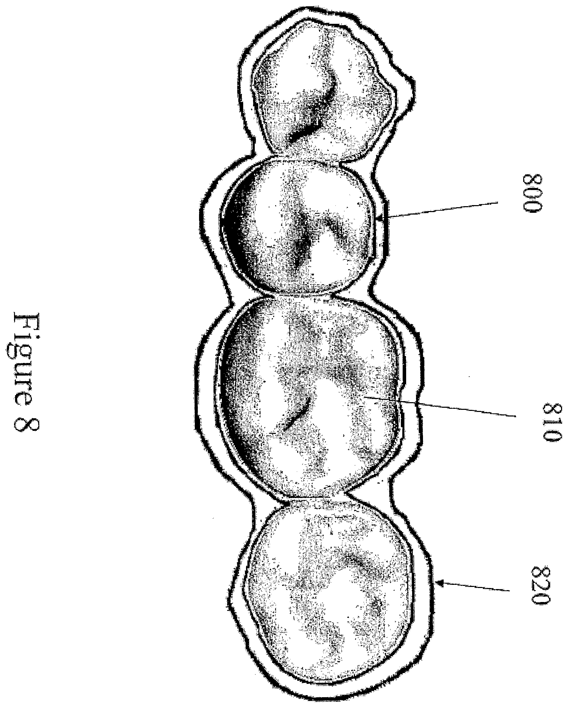

Figure 8 illustrates the top view of a conventional dental aligner 800 that is newly worn on a subject's tooth 810. After it is worn for a period of time, the same dental aligner 820 is relaxed and loose. It can no longer apply effective forces to the tooth 810 to render tooth movement required by the treatment.

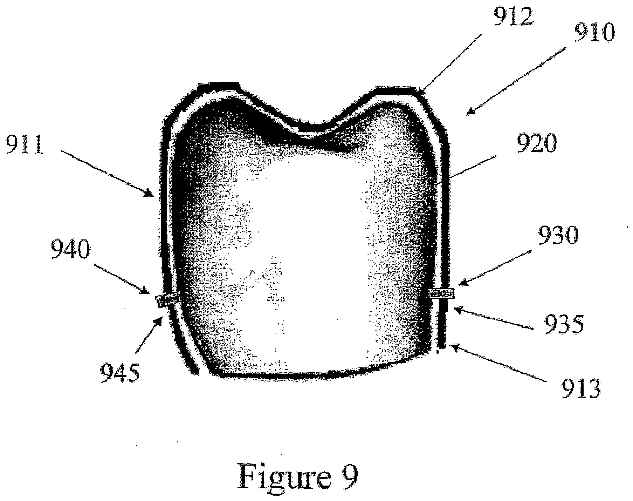

Figure 9 illustrates a cross-sectional view of a snap-on dental aligner 910. The snap-on dental aligner 910 includes a shell portion 911, a tip portion 912, and a bottom portion 913. The snap-on dental aligner 910 also includes through-holes 935 and 945. Connectors 930 and 940 are produced on the subject's tooth 920 in registration with the through-holes 935 and 945. The connectors 930 and 940 can be formed by pre-made components glued to the subject's tooth 920 by adhesives and/or UV assisted polymerization, for example. The connectors 930 and 940 are shown as posts.

One or more connectors 930 and 940 can be fixed of a subject's tooth. Connectors 930 and 940 can be fixed to any or more than one of the shell portion 911, the tip portion 912, and the bottom portion 913. For example, connectors 930 and 940 and through-holes 935 and 945 can be produced near the bottom portion 913 to prevent the relaxation or the opening up of the dental aligner 910 near the gingival line.

The connectors 930 and 940 can be snapped into the through-holes 935 and 945 when the dental aligner 910 is pressed against the tooth 920. The dental aligner 910 is pulled toward the tooth 920 by the snap-on mechanism to come to contact with the subject's tooth 920.

### Non-Uniform Dental Aligners

Dental aligners may also be made having multiple layers (e.g., 2 or more layers). Multiple layers may allow the aligner to resist wear, and to be more comfortably (and accurately) worn by a user. Each layer may comprise a material (or a region of material) having different properties, (e.g., such as stiffness, elasticity, hardness, surface friction, hydrophobicity, etc.). Examples of aligners having such different layers are described below.

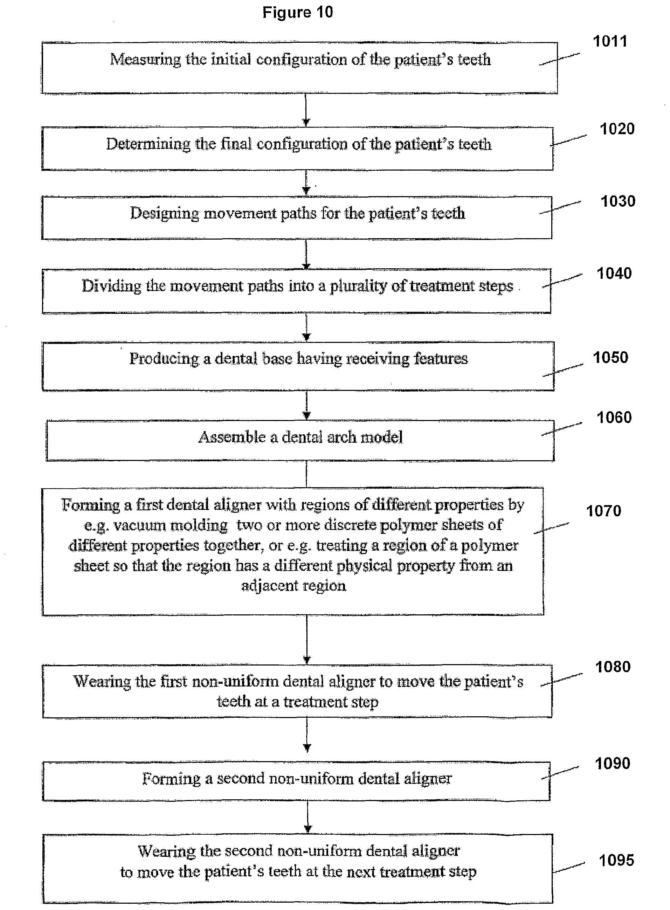

Figure 10 illustrates a process for providing accurate orthodontic treatment for a patient and is one example of how a non-uniform or multi-layer dental appliance may be formed. In this process, the initial configurations of the patient's teeth are measured in step 1010. The initial configurations of the patient's teeth can include the positions and the orientations of the patient's teeth before the treatment begins. The measurement can include making dental impressions of the patient's upper and/or lower arches. The surface locations of the dental impressions are then measured to determine the positions and the orientations of the patient's teeth. Details of conducting measurement on dental impressions are disclosed in the above referenced U.S. Patent Application Serial No. 11/013,159, titled "Producing a base for accurately receiving dental tooth models" by Huafeng Wen, filed 12/14/2004 and U.S. Patent Application Serial No. 11/013,157, titled "Producing accurate base for dental arch model" by Huafeng Wen, filed 12/14/2004. Any appropriate method may be used to fabricate a non-uniform or multi-layered aligner, including those described in the examples herein.

An orthodontist determines the final configuration for the patient's teeth in step 120. With or without the assistance of computer software, the orthodontist designs a treatment plan that specifies movement paths for the patient's teeth in step 1030. The teeth movement should avoid teeth collision into each other. The movement paths are divided into a plurality of successive treatment steps in step 1040. For example, there could be ten to forty steps.

Multi-layer or non-uniform dental aligners can be fabricated with the assistance of physical tooth models. The physical tooth models can be produced in step 1050 and may include registration features for them to be assembled together or to a dental base. The physical dental arch model can be formed on a dental base having receiving features to receive the physical tooth models in step 1060. The physical tooth models of the patient's teeth can be fabricated and used for one or more treatment steps. The dental base can include a plurality of receiving features for receiving the tooth models. The tooth models can comprise registration features compatible with the receiving features. The dental base can include different configurations each corresponding to one or more treatment steps. Dental aligners can be conveniently and inexpensively fabricated using the physical arch models at different treatment steps. The shared use of physical tooth models and the dental base between treatment steps significantly reduces the treatment time and cost. Various steps of the disclosed treatment system and methods are disclosed in the above referenced and commonly assigned U.S. Patent Applications.

Physical tooth models can be fabricated before the first treatment step or produced again in any of the subsequent steps if any of the tooth models are worn or damaged. A plurality of tooth models can also be fabricated at once to save set-up time and handling cost. In one example, the physical tooth models can be molded using the negative impression in a casting chamber. The casting chamber can be filled with a malleable casting material. The casting chamber can be sealed. The casting material is solidified with the assistance of heating, pressure, and/or UV irradiation. A physical arch model of the patient's arch can then be obtained by removing the solidified casting material. The physical arch model can then be separated into a plurality of tooth models. The one or more reference marks can be simultaneously molded on the physical arch model such that the surface points on the physical arch model can be accurately translated back to the original coordinates for the negative arch impression. Details of molding physical arch models are disclosed in the above referenced and commonly assigned U.S. Patent Application Serial No. 11/013,160, titled "System and methods for casting physical tooth model" by Huafeng Wen, filed 12/14/2004 and U.S. Patent Application Serial No. 10/979,823, titled "Method and apparatus for manufacturing and constructing a physical dental arch model" by Huafeng Wen, filed 11/2/2004.

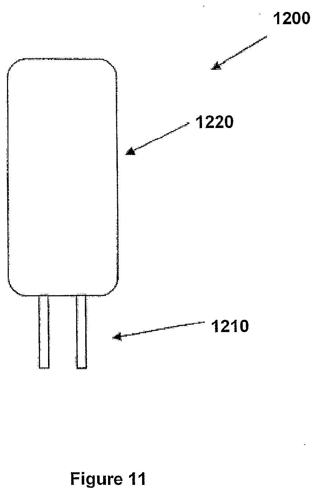

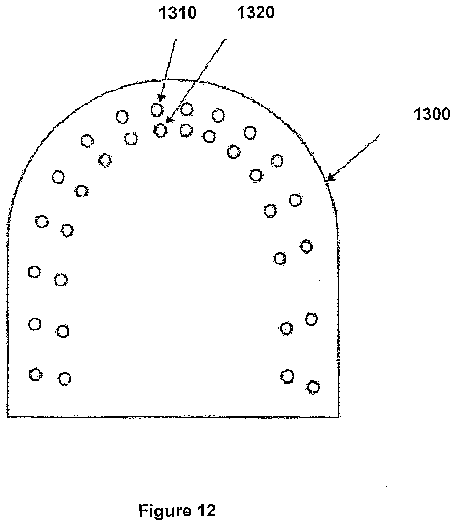

The physical tooth model 1200 shown in Figure 11 can include a tooth model body 1220 and one or more registration features 1210. The registration features can include a pin, a protrusion, a stud, a socket, a slot, a hole, and other features that can be attached to the receiving features on the dental base 1300 as shown in Figure 12. The registration features can be simultaneously produced in the molding process by molding them into the malleable casting materials. For examples, pins can be inserted into the malleable casting material before it is solidified. Alternatively, the registration features 1210 can be produced in the physical tooth model 1200 after the making of the physical arch model and before the physical arch model is separated into the physical tooth models 1200. For example, the registration features 1210 can include sockets that can be drilled by a drilling system on the physical arch model. Details of obtaining a physical dental arch model having registration features and 3D reference positions are disclosed in above referenced US Patent Application titled "Producing a base for accurately receiving dental tooth models" by Huafeng Wen, filed 12/14/2004.

Figure 12 is a top view of a dental base 1300 comprising a plurality of sockets 1310, 1320 for receiving the studs of a plurality of tooth models. The positions of the sockets 1310, 1320 are determined by either initial tooth positions in a patient's arch or the tooth positions during the orthodontic treatment process. The base 1300 can be in the form of a plate as shown in Figure 12, comprising a plurality of pairs of sockets 1310, 1320. Each pair of sockets 1310, 1320 is adapted to receive two pins associated with a physical tooth model. Each pair of sockets includes a socket 1310 on the inside of the tooth arch model and a socket 1320 on the outside of the tooth arch model.

The sockets 1310, 1320 on the dental base 1300 are complimentary to and compatible with the registration features 1210 on the tooth models 1200. The sockets can be drilled by a device under the control of a computer. The locations of the sockets can be translated to the reference marks in the dental impression. In general, the receiving features and the registration features can include one or more of pins, protrusions, studs, sockets, slots, and holes. The physical tooth models 1200 are attached to the dental base 1300 to form a dental arch model in step 1060. The dental arch model can be a model for a whole upper arch or a lower arch of the patient, or a portion of the upper or lower arch of the patient.

A multi-layer dental aligner can be fabricated by vacuum forming or thermal forming the aligner. The multi-layer dental aligner can comprise two or more layers that are formed in two or more steps. The different layers can be made of different dental-aligner materials of different properties. For example, the outer layer can have higher hardness than the inner layer(s) to provide durability against chewing, biting, etc. during usage. The outer layer can also comprise a material less sensitive to elevated temperature such that it will not deform or relax when the patient drinks hot fluids and eats hot food. The outer layer can have substantially the same color as and similar texture to the patient's teeth to make it more aesthetically appealing.

The outer layer may be softer than the inner layer(s). The softer outer layer can help the fitting between the teeth of the patient's upper arch and the lower arch. For example, the outer layer may comprise a biocompatible material (e.g., polymer such as polyfluorocarbons such as the various PTFEs and expanded PTFE, polypropylene, polyethylene, polyoxymethylene, polycarbonate, polyesters including polyamides such as the Nylons, polyphenylene oxide, and polyurethane or elastomeric polymers including Silicones, natural rubber, butadiene-styrene rubber, carboxylic butadiene-styrene, butadiene-acrylonitrile rubber, carboxylic butadiene-acrylonitrile rubber, chlorobutadiene rubber, polybutadiene rubber, silicone rubbers, and acrylate rubbers, perhaps vulcanized, and other elastomeric materials). Other soft materials may include foamed polymers (e.g., foamed polyurethane, foamed polystyrene, foamed polypropylene, etc.).

The inner layer may have a different color from the outer layer. The inner layer(s) can be softer than the outer layer to make the multi-layer dental aligner more comfortable for the patient to wear. The softer inner layer may also allow wider contact area to the patient's teeth, making it easier to fit to the patient's teeth. The inner layer may have different surface properties than the outer layer(s). For example, the inner layer may be textured, or may comprise a material that more readily sticks to structures in the oral cavity (e.g., the teeth). The fit of a softer inner layer may also relax tolerance on the precision of the aligner manufacturing.

The deformation of the dental aligners with use can theoretically be overcome by using a single layer of a harder dental aligner material. But a harder aligner is usually less comfortable for a patient to wear. The harder aligner also provides less contact areas to the patient's teeth. The combination of different dental aligner layers of different properties in the disclosed system can overcome the aligner deformation problem without creating discomfort to the patient.

Any appropriate biocompatible (e.g., non-toxic, etc.) material may be used for the hard material comprising an aligner, including polymers (e.g., polyfluorocarbons, polypropylene, polyethylene, polyoxymethylene, polycarbonate, polyesters, and polyurethanes, etc.), metals, ceramics, and composites of any of these. Of course "hardness" and "softness" of the different layers of an aligner are relative terms, which may reflect comparative measure of the surface hardness, structural hardness, elasticity and/or stiffness of a material. Furthermore, relatively hard and relatively soft versions of the same material may be used as different layers (or different regions of the same layer) in the aligners described herein.

A non-uniform dental aligner may comprise one or more layers of polymeric material in which regions of a polymer layer are continuous in structure with adjoining regions (compared to discontinuous regions or interfaces as may be formed by bonding two distinct films to one another) but differ in properties from one another. The different areas or regions have different physical properties as enumerated above. For example, the outer section can have higher hardness than the inner section to provide durability against chewing, biting, etc. during usage. The outer section can also comprise a material less sensitive to elevated temperature such that it will not deform or relax when the patient drinks hot fluids and eats hot food. Alternatively, the outer sections can be softer than inner section to provide better fitting between the teeth of the patient's upper arch and lower arches. The outer section can have substantially the same color as and similar texture to the patient's teeth to make it more aesthetically appealing.

The inner section can be softer than the outer section to make the non-uniform dental aligner more comfortable for the patient to wear. The softer inner sections may provide flexibility to the dental aligner and allow better contact to the patient's teeth, making it easier to fit to the patient's teeth. Furthermore, the easier fitting enabled by the flexibility of softer inner sections relaxes tolerance on the precision of the aligner manufacturing.

A first non-uniform dental aligner is formed in step 1070 as shown in Figure 10. The patient wears the first non-uniform dental aligner to move teeth into target configurations at a treatment step in step 1080. A second non-uniform dental aligner is formed in step 1090 in a similar process. The patient wears the second non-uniform dental aligner to move teeth into target configurations at the next treatment step in step 1095. The patient can wear one or a plurality of the non-uniform dental aligners at each treatment step. Each of the aligners can be worn for a period of time such as a few hours to a few weeks. The treatment process is completed by iterating through the treatment steps to move the patient's teeth to the final configuration. The teeth movement caused by the non-uniform dental aligner may not be as designed by the treatment plan. The teeth movement caused by one or more non-uniform aligners can be measured. The measurement can serve as a feedback to the adjustment of the treatment plan.

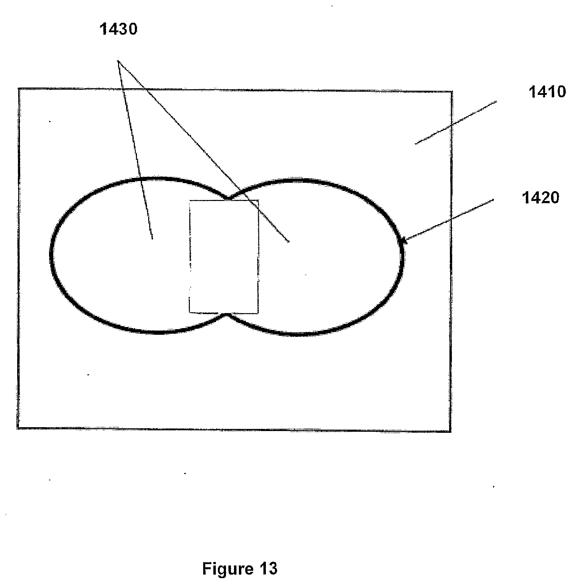

A first dental aligner layer of a multi-layer dental aligner is formed as shown in Figure 13. A sheet 1410 of a first aligner-making material can be attached to a sheet holder and then lifted up near a heating element. After the sheet 1410 is heated for a specified time, the sheet holder is pressed or held against a patient's physical tooth models on the dental base 1300. In this case, the upper and lower arch models are both present so that the upper and lower aligners may be formed simultaneously. A vacuum pump removes air at the bottom of the dental base 1300 through suction holes in the dental base 1300. The air suction causes the softened first aligner-making material to conform to the physical tooth models. The sheet 1410 thus fittingly forms around the surface the dental arch model around the gingival lines 1420 of the physical tooth models. The sheet 1410 is then cooled and hardened, and holes are formed through sheet 1410.

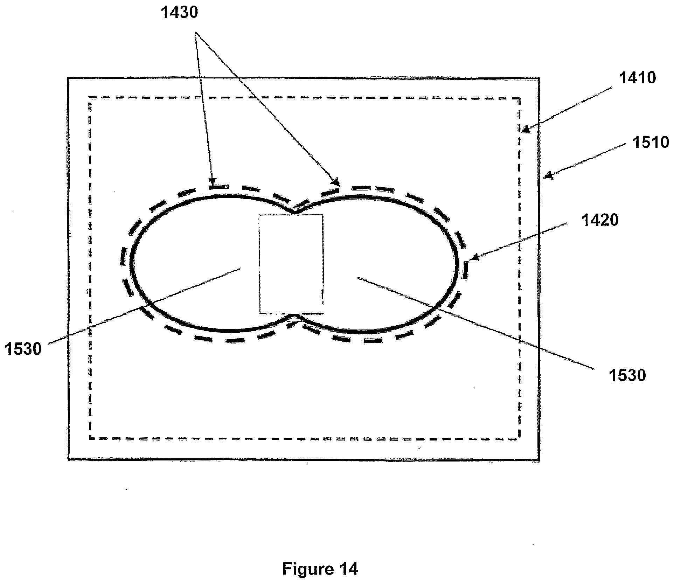

A second dental aligner layer of a multi-layer dental aligner may be formed in step 1075 as illustrated in Figure 14. A sheet 1510 of a second aligner-making material can be attached to a sheet holder and then lifted up near a heating element. After the sheet 1510 is heated sufficiently, the sheet holder is held on the sheet 1410 over the patient's physical tooth models on the dental base 1300. A vacuum pump removes air at the bottom of the dental base 1300 and through the holes formed in sheet 1410 to cause the softened second aligner-making material to conform to the surface of sheet 1410.

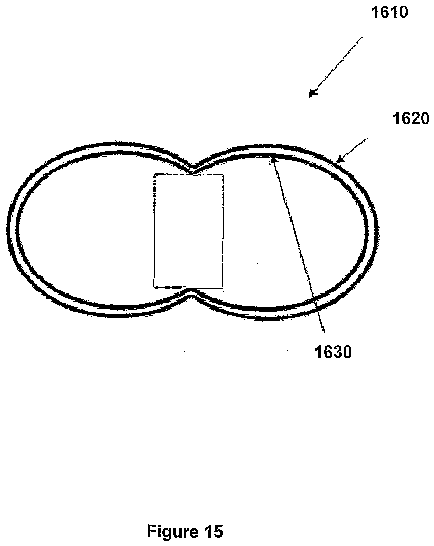

After the sheet 1510 is cooled and hardened, the sheet 1410 and the sheet 1510 can then be cut along gingival lines 1420 to form a multi-layer dental aligner layer 1530. Figure 15 is a top view of a multi-layer dental aligner 1610 comprising a first aligner layer 1620 and a second aligner layer 1630. The individual arch-shaped aligners may be separated from one another. In some variations, the second layer is formed by a different method than the first layer. For example, the second layer maybe formed by extruding, dipping. coating, depositing, etc. onto the pre-formed first layer. In some variations, the first and second layer may be combined prior to forming over the tooth model and then (together) formed over the tooth model as described.

The different layers (e.g., first and second layers) may be attached to each other directly, or an adhesive may be used to connect the different layers.

In another arrangement, each of the dental aligner layers can be separately cut. The sheet 1410 can be cut along the gingival lines 1420 after the sheet 1410 conforms to the physical tooth models to obtain a first aligner layer 1430. The sheet 1510 is then heated and held against the first aligner layer 1430 over the physical tooth models. After cool down, the sheet 1510 can then be cut along gingival lines 1420 to form a multi-layer dental aligner 1610 comprising the first aligner layer 1620 and the second aligner layer 1630.

In another arrangement, two or more polymer sheets may be laminated to one another to form a single sheet that is heated and vacuum-formed over the arch models to provide multi-layer dental aligners.

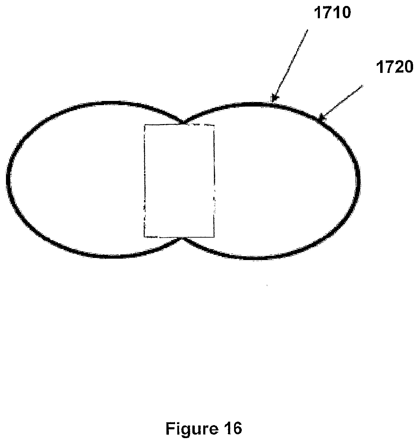

Figure 16 is a cross-sectional view of a multi-layer dental aligner 1700 worn on a patient's tooth 1710. The multi-layer dental aligner 1700 comprises an inner aligner layer 1720 in contact with the tooth 1710 and an outer aligner layer 1730. The outer aligner layer 1730 can provide strength and durability, which helps to prevent deformation and relaxation of the aligner especially along the gingival lines. The inner layer can be made of softer material that enables better contact with the patient tooth 1710. The multilayer structure of the multi-layer dental aligner 1700 can therefore improve aligner's performance and extend usage time. Manufacturing robustness and aligner costs are also reduced.

The different dental-aligner layers in the multi-layer dental aligner 1700 can also comprise the same material. That is, rather than forming a dental aligner by a thick layer of the same aligner-making material, the aligner is formed by a plurality of thinner layers of aligner-making material using vacuum forming. The thinner layers can be more easily conformed to the physical tooth models than a single thick layer.

Further, a wider array of polymers may be utilized where thinner layers are used to form an appliance. Polymers of disparate properties may delaminate from one another where thicker films are used. Thinner films allow more intimate contact between polymer sheets and therefore help bond the films to one another.

A dental aligner may also be formed so that it has sections or portions of different properties. The non-uniform dental aligner 1710 of Figure 16 is formed from a polymer sheet having sections of different properties. The different sections can be formed using different thermal profiles in the vacuum forming process, for instance. Some sections of the non-uniform dental aligner 1710 can be heated at higher temperature and/or for a longer period of time than e.g. section 1720. A temperature distribution for the polymer sheet can be designed using software on a computer to produce desired distribution of properties. Alternatively or additionally, the different sections can be formed through a different pressure profiles generated by vacuum suction. The size and density of holes in the dental base can be fabricated to achieve a pressure distribution such that the polymer sheet of aligner making material can be subjected to different degrees of holding force during vacuum forming.

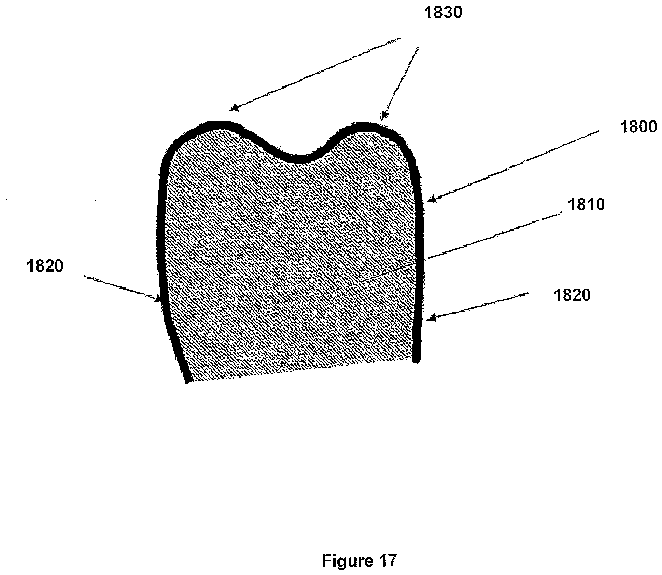

Figure 17 is a cross-sectional view of a non-uniform dental aligner 1800 worn on a patient's tooth 1810. The non-uniform dental aligner 1800 can comprise inner sections 1820 and outer sections 1830. The inner sections 1820 and the outer sections 1830 are characterized as having different values of one or more physical properties. For example, they can have different compressional, bending, or torsional elastic constants. They may also have during thermal properties.

In one arrangement, the outer sections 1830 can provide strength and durability to sustain chewing and biting. The inner sections can be made of softer material that enables better contact with the patient tooth 1810 and prevents deformation and relaxation of the aligner especially along the gingival lines. The non-uniform dental aligner 1800 therefore can improve aligner's performance and extend usage time. Manufacturing robustness and aligner costs can also be reduced.

Particular examples of materials for dental aligners include polymers of acrylic, methacrylic, acrylate, methacrylate, carbonate, urethane, urea, epoxy, and other polymeric materials. The material selections of the inner and outer aligner layers or the different sections can include different materials or the same material family but different compositions (e.g. different degrees of polymerizations). The aligner materials may possess the following general properties: the ease to be vacuum-formed or molded, the capability to be extruded into films or filament, enough hardness to prevent breakage, flexibility, relatively high melting temperature to stand mild heat, strong enough to resist deformation, pliability, and food-grade that is safe for oral use. Preferably, the material is transparent or close to the colors of the patient's teeth. Other common materials available for the aligner making include those already described, including polymers, plaster, stone, clay, metals, wood, paper, ceramics, and porcelain.

The aligner-making materials can also include porous materials to allow air and liquid to pass through to reduce bacteria growth and odor in the patient's mouth. Passages or channels may also be included in the aligner (e.g., formed or later cut or drilled). As described further below, the surface or structure of the multi-layer dental aligners can also be wrinkled to further improve durability and reduce the deformation and relaxation over usage. Details of fabricating dental aligners of different properties in various arrangements are also disclosed in the above referenced U.S. Patent Application Serial No. 10/979,497, titled "Method and apparatus for manufacturing and constructing a dental aligner" by Huafeng Wen, filed 11/2/2004, U.S. Patent Application No. 11/074,301, titled "Dental aligner for providing accurate dental treatment" by Liu et al, filed 3/7/2005, U.S. Patent Application No. 11/074,297, titled "Producing wrinkled dental aligner for dental treatment" by Liu et al, filed 3/7/2005, U.S. Patent Application No. 11/074,300, titled "Fluid permeable dental aligner" by Huafeng Wen, filed 3/7/2005, and U.S. Patent Application Serial No. 11/074,298, titled "Disposable dental aligner by Huafeng Wen, filed 3/7/2005.

The patient can wear one or a plurality of the multi-layer dental aligners at a treatment step in step 1080 of Figure 10. Each of the aligners can be worn for a period of time such as a few hours to a few weeks. After a treatment step is completed, one or more multi-layer or non-uniform dental aligners can be produced for the next treatment step in step 1090 for the patient to wear in step 1095. The teeth movement caused by the multi-layer dental aligner may not be as designed by the treatment plan. The teeth movement caused by one or more multi-layer or non-uniform aligners can be measured. The measurement can serve as a feedback to the adjustment of the treatment plan.

Properties that may differ in regions of an appliance include color, texture, flexural strength, tensile modulus, flexural modulus, hardness, thermal conductivity, heat capacity, compression modulus, and toughness. Regions differ from one another by one or more of the properties listed above.

For instance, a first portion of an appliance that contacts or is near the gum may have a lower flexural strength than does a second portion of an appliance in contact with a tooth. The lower flexural strength permits the first portion to conform better to the gum, providing a more comfortable appliance. Similarly, the flexural modulus of a portion of the appliance contacting or near the gum may be lower than the flexural modulus of another portion of the appliance contacting the tooth.

The thermal conductivity of the outer portion of an appliance may be lower than the thermal conductivity of an inner portion. The lower thermal conductivity of the outer polymeric material insulates the tooth from temperatures that may aggravate teeth and nerves that are already sensitized by tooth movement. Similarly, a material on the outer surface of an appliance may have a higher heat capacity than a polymer on the inner surface so that the outer surface absorbs heat without elevating the temperature to an uncomfortable level.

Compression modulus may differ in regions of an appliance. For instance, regions of an appliance subjected to tooth grinding forces or forces imparted by a clenched jaw may have a lower compression modulus than e.g. portions along a tooth sidewall to allow the polymer to yield somewhat to aid in comfort.

Color and texture of the appliance may be set to enhance comfort and/or appearance. Color may differ in different sections of an appliance. Portions of an appliance that contact gingival tissue may be pinkish, whereas portions of the appliance that contact the tooth may be whitish. Likewise, texture may differ to better match gingival tissue and teeth in various regions of the appliance.

The disclosed systems, devices, and method may include one or more of the following advantages. The disclosed system and methods may provide durable dental aligners for moving patient's teeth. The dental aligners can be formed of a plurality of layers with a hard outer layer and one or more relatively softer inner layers. A harder outer (or inner) layer may assure that the dental aligner sustains the mechanical and thermal impacts during the dental aligner's usage. The dental aligners may avoid the deforming and relaxation problems in the current dental aligning devices, and can maintain corrective force to the teeth movement during the intended treatment step.

Another advantage of a disclosed system is that the dental aligners can be more comfortable for the patient to wear over teeth. The dental aligners can include a relatively softer inner layer in contact with the patient's teeth. The softer inner layer assures large contact areas for transmitting forces from the aligners to patient's teeth. The softer inner layer also provides wider tolerance in the aligner manufacturing because the fitting of the aligners on the patient's teeth are less sensitive to the exact shapes of the outer layer of the dental aligner. Manufacturing and rework costs are therefore reduced.

The disclosed system and methods may provide durable dental aligners for moving patient's teeth. The dental aligners can include a layer or region of non-uniformly distributed aligner-making material. The aligner-making material can be harder in the contact areas between the patient's teeth in upper arch and the teeth in the lower arch, which assures the non-uniform dental aligner to sustain the mechanical and thermal impact during the non-uniform dental aligner's usage such as chewing, biting, etc.

The aligner-making material in certain sections of the aligner layer may be softer in some areas to allow flexibility and better contact to the patient's teeth. A softer and more elastic material may allow the non-uniform dental aligner to be more tightly wrapped around the gingival lines of the patient's teeth. The deformation and relaxation problems in the current dental aligning devices can be prevented. The non-uniform dental aligner can thus maintain corrective force to the teeth movement during the intended treatment step. The softer areas of the aligner-making material assure larger contact areas for transmitting forces by the non-uniform aligners to patient's teeth.

The non-uniform dental aligner may also provide wider tolerance in the aligner manufacturing because of the built-in flexibility in the non-uniform dental aligner. The fitting of the non-uniform dental aligner on the patient's teeth may be less sensitive to the exact shapes of the dental aligner. Manufacturing and rework costs are therefore reduced. The non-uniform dental aligner may also be more comfortable for the patient to wear because it is more easily fit to the patient's teeth.

The appliances and methods herein are not those disclosed in U.S. Pat. No. 6,183,248 and 6,524,101.

In addition to aligners having different layers, the aligners described herein may also comprise a single layer that has regions of different material properties. For example, the material (e.g.,. the polymer) forming an aligner may be treated differently (by heat, light, chemical treatment, etc.). For example, the inner region of the aligner may be heat treated to further polymerize the aligner material, resulting in a harder inner surface. In another variation, the inner surface of the aligner is treated so that it has a surface that is roughened compared to the outer surface.

### Fluid Permeable Aligners

As described briefly above, an appliance may be fluid permeable. For example, removal dental aligners may be fabricated using a fluid-permeable material to allow fluid to communicate between the outer surface and the inner surface of the dental aligner, or a removable dental aligner may be treated to make it fluid permeable. Thus, a fluid-permeable appliance may comprises pores or micro-channels to allow air and liquid to permeate through to the patient's teeth, which suppresses the growth of the VSC producing bacteria in the patient's mount and improves the patient's oral hygiene. Air trapped in the dental aligner can also be circulated out continuously, which also helps to suppress the unnatural growth of anaerobic bacteria and associated halitosis. Oxygenated saliva liquid passing through the permeable material to the cervical line of the patient's teeth may reduce the amount of bacterial VSCs, which reduces the risks for halitosis.

Fluid-permeable appliances may be permeable to any fluid (e.g., liquids and gas, particularly water or saliva). The pores may correspond to channels, passages or openings in the appliances. As described further below, any appropriate size pore (or range of sizes) may be used. In some variations, only a region of the appliance is fluid permeable.

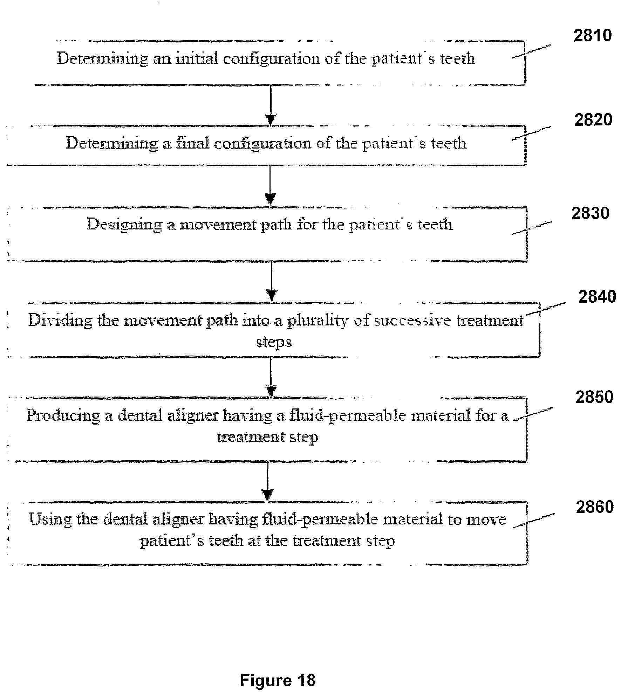

Figure 18 illustrates a process for producing a dental aligner made of a fluid permeable material. Although Fig. 18 describes one method of forming a fluid-permeable dental aligner, any appropriate method may be used. In an orthodontic treatment, an initial configuration of the patient's arch is first determined in step 2810. The patient's arch can include one or more teeth in the upper jaw and lower jaw. The configuration includes positions and orientations of the patient's teeth. The initial configuration can be obtained by first producing a negative impression of the patient's arch and then scanning the surfaces of the negative impression by 3D positional measurement devices. The dentist may analyze the initial configuration of the patient's teeth and determines the final configuration of the patient's teeth in step 2820. The final configuration comprises the positions and the orientations of the patient's teeth after the corrective treatment process.

The dentist will then design a movement path for each of the teeth involved in step 2830. A typical orthodontic treatment is usually divided into a plurality of successive treatment steps in step 2840. One or more specifically designed disposable dental aligners are used to move the patient's teeth to a pre-designed target configuration. The treatment at the step is intended to produce incremental amounts of changes in positions or orientations that are within the comfort tolerance of the patient as well as the performance of the dental aligner.

The removable dental aligner is typically shell shaped and can be worn by a patient over his or her dental arch to produce corrective movement in a patient's teeth. As described above, a dental aligner typically includes a shell portion, an outer surface of the shell portion, and an inner surface of the shell portion. The inner surface will be in contact with the patient's teeth. The shell-shaped dental aligner can further include a bottom portion to be placed near the gingival of the patient's tooth and a tip portion on the opposite side of the bottom portion.

Fluid-permeable dental aligners allow air or liquid to communicate between the patient's tooth and the vicinity of the outer surface. Dental aligners are fabricated to achieve the same incremental teeth movement at that particular step 2850. The dental aligners can be molded using fluid-permeable materials in a casting chamber. The mold can be a negative impression produced by a physical dental arch model that comprises the patient's tooth models that are configured in the target configuration for the specific treatment step. The dental aligners can also be fabricated by a CNC based machine in response to a digital aligner model.

Details of producing physical dental arch model and associated base are disclosed in the above referenced and commonly assigned U.S. Patent Application Serial No. 10/979,823, titled "Method and apparatus for manufacturing and constructing a physical dental arch model" by Huafeng Wen, filed 11/2/2004, U.S. Patent Application Serial No. 10/979,497, titled "Method and apparatus for manufacturing and constructing a dental aligner" by Huafeng Wen, filed 11/2/2004, U.S. Patent Application Serial No. 10/979,504, titled "Producing an adjustable physical dental arch model" by Huafeng Wen, filed 11/2/2004, and U.S. Patent Application Serial No. 10/979,824, titled "Producing a base for physical dental arch model" by Huafeng Wen, filed 11/2/2004.

The effects of the dental aligners having permeable materials can be simulated by computer modeling. The progressive teeth configurations in an orthodontic treatment can be represented by a digital dental arch model. The disposable aligners can be simulated by a digital aligner model. The computer simulation helps to determine the number of steps needed for each treatment, the material properties of the dental aligners. In particular, the properties of the permeable materials can be simulated to predict and optimize the fluid permeation function of the dental aligner. The fluid permeability of the dental aligner can be optimized by varying the diameters and the density of the pores. The preferred material properties and structures are predicted. Materials and fabrication processes can be experimented and selected to achieve the desired properties and structures in the dental aligners.

The pore density and diameters can be of uniform or non-uniform distribution across the dental aligners. For example, the pore density can be higher at the portion of the shell-shaped dental aligner along cervical lines to allow extra air and liquid communication to the cervical lines of the patient's teeth to prevent bacteria growth. The hardness of the dental aligners can also be varied depending on the intended length of use of a particular dental aligner. In addition, the fluid permeation properties can also depend on the patient life style, his or her use pattern of the dental aligner, and the climate in which he or she wears the dental aligning devices. These optimized properties may improve the patient comfort and convenience in using the dental aligner having fluid-permeable material for corrective orthodontic treatment in step 2860.

The dental aligners can include wrinkled surfaces to enhance the strength and sustainability of the dental aligner. Details of wrinkled dental aligners and the fabrications are described in more detail below.

The dental aligners comprising fluid-permeable material can also be disposable. A plurality of disposable dental aligners having substantially identical shape can be produced for a single step of the treatment. The use of multiple disposable dental aligners allows a disposal dental aligner to be replaced before it is relaxed and deforms. This assures the uniform application of force the patient's teeth over time and improves the accuracy of the treatment. Because of their effectiveness, the disposal dental aligners can shorten the overall treatment time. The disposal dental aligners is also more comfortable for the patient to wear because of the smaller granular movements induced by each disposal dental aligner. Details of the manufacturing of disposable dental aligners are also described in more detail below.

A variety of fluid-permeable materials are compatible with the disclosed methods and system. The fluid-permeable materials can include polymeric materials prepared by copolymerizing styrene and divinylbenzene (DVB). Very small pores or 'micropores' can be formed in such process as a result of DVB tying together linear chains of styrene at various points. The "degree of cross-linking" is determined by the percentage of DVB present. The "degree of cross-linking" in turn determines the size of the pores. A 10% cross-linked polymer contains 10% DVB and has somewhat smaller pores than a 2% cross-linked polymer since the additional DVB creates additional linkage points making the average distance between those points smaller. However, as cross-linking is reduced pore size increases, the physical stability of the polymer decreases. Fluid permeability and strength therefore need to be co-optimized in designing dental aligners. Pore sizes are typically less than 30 Å in diameter and fairly uniform distributed.

Another type of porous polymer was independently developed in the late 1950s by scientists at The Dow Chemical Company and at Rohm and Haas. These materials have come to be called "macroporous polymers", and pores are formed independently of cross-linking. Polymerization takes place in the presence of "porogens". Porogens are substances that are soluble in monomers, but insoluble in formed polymers. Thus, as polymerization proceeds, pores are formed in the spaces where porogens are found. Pore diameters are typically greater than 50 Å, with some polymers having pore diameters as great as 2000 to 4000 Å. Most polymers, however, contain pores in the 100 Å to 300 Å range. Pore size distributions tend to be somewhat broad, particularly in polymers having large average pore sizes. These materials are characterized by irregular shaped pores that terminate within the polymer body. Macroporous polymers are usually prepared with a high degree of cross-linking (typically 30% or greater) to lend greater physical stability to the resulting material and to yield polymers that do not swell in solvents. The discovery of this route to synthesizing polymers led to materials with much larger pore size and much higher porosity than preceding microporous materials; however total porosity rarely exceeds 50%. Details of this type of porous polymers are disclosed in U.S. Patent 3,322,695 titled "Preparation of Porous Structures" by Alfrey et al., and U.S. Patent 4,224,415 titled "Polymerization Processes and Products Therefrom" by Meitzner et al..

Other porous materials include porous polymer structures known as "high internal phase emulsions" ("HIPE") that are disclosed in US Patent 4,522,953 "Low Density Porous Cross-linked Polymeric Materials and their Preparation and Use as Carriers for Included Liquids" by Barby et al. and US Patent 5,583,162 titled "Polymeric Microbeads and Method of Preparation" by Li et al..

Another approach of making fluid permeable dental aligners is to mix a base sheet material with small granules of a low-density compound (usually a form of plastic). The low-density compound has a lower sublimation point than the base material. The sheet of material mixture is then placed in a heated container over a mould. Air is pumped out. The appliance is separated from the mould and is subjected to high temperature and/or pressure, which results in the sublimation of the granular low-density material. The molecules of the material are converted to gaseous forms (in case of plastic, formaldehyde) and leave behind pores large enough to let gas and/or liquid molecules pass through.

Pores can also be made in the dental aligner. For example, a laser may be used (e.g., particularly a power-stable laser). The diameter of the pores or holes can be controlled, for example, in the range between 40 - 400 *µ*m at a perforation speed as high as 500,000 holes per second. The density and pore sizes can be directly controlled by a computer in response to a dental aligner model.

### Disposable Aligners

The appliances described herein may also be disposable. In general, disposable aligners include "redundant" aligners, wherein multiple aligners having the same basic shape (e.g., the same treatment effect) are provided to be used within the same treatment step. Disposable aligners may help overcome the aforementioned problem with relaxation or loss of shape which occurs as aligners are worn or age. For example, aligners can become relaxed and "open up" after repeated usage by a patient, or the patient can bite the aligner to cause aligner to bend outwards. Further, each time the patient takes off the aligner during eating, drinking, or before sleep, the bottom part of the aligner tend to open up and relax. Material relaxation at bottom of the aligner over usage time can render ineffective application of force at the bottom of the teeth. Relaxation of an aligner can occur after only a few days of usage. The loss of corrective force applied by the aligner to the patient's teeth results in insufficient or inaccurate teeth movement, requiring reordering of the same aligners and delay in the orthodontic treatment, which are costly for the patients.

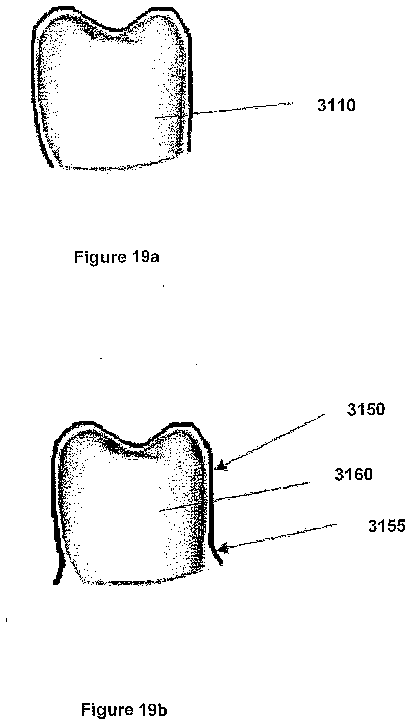

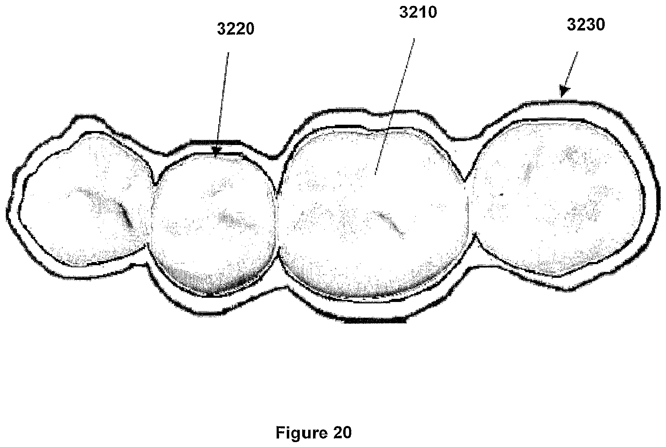

To illustrate the above described problem, Figure 19a illustrates a side view of a new aligner 3100 worn a patient's tooth 31 10. The aligner is typically in a shell shape, comprising shell portion, a tip portion, and a bottom portion. The inner surface of the shell portion is to be in contact with the patient's teeth. The aligner fits properly at the bottom of the tooth where the gingival separates the tooth from the root. The newly worn aligner 3100 provides proper and effective force for the tooth movement in the orthodontic treatment. Figure 19b shows the side view of the aligner 3150 that has been worn on the patient's tooth 3160 after a period of usage such as a few days or a week. The lower part 3155 of the dental aligner 3150 is relaxed and opened up, which prevents the dental aligner 3150 to exert proper stress on the bottom of the tooth. The dental aligner 3150 thus can no longer produce effective and accurate tooth movement. Figure 20 illustrates the top view of a conventional dental aligner 220 that is newly worn on a patient's tooth 3210. After it is worn for a period of time, the dental aligner 3230 is relaxed and loose. It can no longer apply effective forces to the tooth 3210.

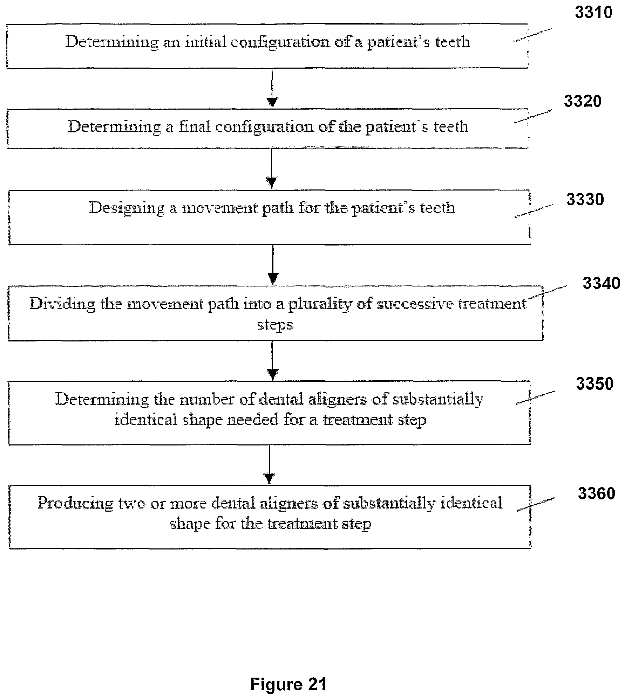

Figure 21 illustrates a process for producing a disposable dental aligner. In an orthodontic treatment, an initial configuration of the patient's arch is first determined in step 3310. The patient's arch can include one or more teeth in the upper jaw and lower jaw. The configuration includes positions and orientations of the patient's teeth. The initial configuration can be obtained by first producing a negative impression of the patient's arch and then scanning the surfaces of the negative impression by 3D positional measurement devices. The dentist analyzes the initial configuration of the patient's teeth and determines the final configuration of the patient's teeth in step 3320. The final configuration comprises the positions and the orientations of the patient's teeth after the corrective treatment.

The dentist will then design a movement path for each of the teeth involved in step 3330. A typical orthodontic treatment is usually divided into a plurality of successive treatment steps in step 3340. One or more specifically designed disposable dental aligners are used to move the patient's teeth to a pre-designed target configuration. The treatment at the step is intended to produce incremental amounts of changes in positions or orientations that are within the comfort tolerance of the patient as well as the performance of the dental aligner.

Once the movement path is determined and divided into steps, the dentist, orthodontist, or other practitioner may determine how long each step of the treatment step. Generally, the length of time that a given treatment path may be estimated by the expertise of the practitioner. In some variations, the time for each treatment path may be calculated (e.g., manually or via computer program) based on information about the subject's dental arch. For example, the estimate of how long a treatment step will take may be based upon comparison with how long a similar treatment step took in similar dental arches in other patients (historical data), or based upon the patient's age and dental health, the type of teeth being moved, the amount and type of movement being made (e.g., rotation versus linear translation), and the type and shape of the aligner.

A plurality of disposable dental aligners may be designed for each step of the treatment. The plurality of disposable dental aligners has substantially identical shape designed to achieve the same incremental teeth movement at that particular step. The patient will receive the set of disposable dental aligner at once without visiting the dentist office he or she switches from one disposal dental aligner to the other.

The disposal dental aligners are designed to be worn by the patient for a shorter period of time than conventional dental aligners. A patient can change disposable dental aligner every week, every three days, every day, or even in a matter of hours or minutes. For example, the patient can wear a disposal aligner just for having dinner.

An optimal wearing interval may be determined for an aligner. The optimal wearing interval may be based upon the aligner's structure (e.g., material, size, etc.), or may be based upon predicted use. The frequency of change of the disposal dental aligner (e.g., optimal wearing interval) may depend on the patient's profile or lifestyle. The number of disposal dental aligners for each treatment step is determined in step 3350, which can depend on factors such as the number of meals, the sleeping pattern, and dental hygiene of the particular patient. For example, if a person is a heavy smoker, he will be advised to change the disposable aligners more frequently that someone who is very strict about his oral hygiene. The number of disposal dental aligners for each treatment step can also depend on the relative magnitude of the incremental movement designed in that treatment step. For example, the optimal wearing interval may be twelve hours, one day, two days, three days, four days, a week, two weeks, or a month.

The effect of the disposable dental aligners can be simulated by computer modeling. The progressive teeth configurations in an orthodontic treatment can be represented by a digital dental arch model. The disposable aligners can be simulated by a digital aligner model. The effects of the multiple disposal dental aligners on the patient's teeth can be simulated at each treatment step. The computer simulation helps to determine the number of steps needed for each treatment, the material properties of the disposal dental aligners as well as the number of dental aligners of substantially identical shape for each step.

The use of multiple disposable dental aligners allows a disposal dental aligner to be replaced before it is relaxed and deforms. This assures the uniform application of force the patient's teeth over time and improves the accuracy of the treatment. Because of their effectiveness, the disposal dental aligners can shorten the overall treatment time. The disposal dental aligners is also more comfortable for the patient to wear because of the smaller granular movements induced by each disposal dental aligner.

The disposable aligners are produced in step 3360 for each treatment step. Any appropriate fabrication method may be used. It is worth noting that (because they are disposable), the disposable aligners may be more easily fabricated, or may be fabricated more inexpensively, because less durable material may be used. For example, thinner material, or material having less strength than other materials used for traditional aligners. Further, in fabricating the disposable dental aligners, identical aligners can be fabricated in parallel or in series using the same molds, etc.

For example, two or more disposal dental aligners can be molded using the same mold in a casting chamber. The mold can be a negative impression produced by a physical dental arch model that comprises the patient's tooth models that are configured in the target configuration for the specific treatment step. The disposable dental aligners can also be fabricated by a CNC based machine that receives a digital aligner model as input. Details of producing physical dental arch model and associated base are disclosed above, as well as in the above referenced patents and applications.

It may be desirable to produce all of the aligners needed for a particular treatment step at one time. The number of disposable dental aligners made per treatment step may be determined from the amount of time the treatment step will take and the estimate of the optimal wearing interval. For example, if it will take three weeks for a treatment step to be complete, and the optimal wearing interval (e.g., recommended wearing interval) is two days, then it will take at least 11 aligners to complete the treatment step using the optimal wearing interval.

The disposal dental aligners produced by the above processes therefore have substantially the same shape. As described above, different materials however can be used for the different molding events to mold disposable aligners of different hardness. The surface of the positive impression can include features for molding wrinkled surfaces to produce the wrinkled disposable aligners, as described further below.

The mold for making a disposal aligner can be kept at the orthodontist's office. Additional disposable aligners can be easily made whenever more copies are needed. The mold could also be sent to the clinic or to the patient's home where the disposable dental aligners can be made conveniently without the intervention of the orthodontist.

As described above, the disposable aligners can be made of materials that possess the following general properties: the ease to be molded, the capability to be extruded into films or filament, enough hardness to prevent breakage, flexibility, relatively high melting temperature to stand mild heat, strong enough to resist deformation, pliability, and food-grade that is safe for oral use. Preferably, the material is transparent. Examples of materials for disposable dental aligners include acrylic and polycarbonate.

Conventional aligners are usually worn for a period of approximately two weeks, and thus the material properties are optimized to allow it to last for two weeks without breaking. The material properties of the disposal aligner may be optimized to be just hard enough to last for just one or two days before it is discarded.

In another variation, the disposal dental aligners for a treatment step can comprise slightly different materials. The disposable aligner to be worn at the earlier time of a treatment step can be made of relatively softer material so that the patient can more comfortably wear them (e.g., without feeling much pressure to initiate the teeth movement at the particular treatment step). For instance, the patient may wear the first disposable dental aligner for two days and switch to another disposable dental aligner with increasing hardness. The latter aligners can help to reinforce and solidify the initial movement achieved until the desired full-step movement is achieved.

### Wrinkled Aligners

Dental appliances may also be designed and fabricated to include structures or regions which may flex to relieve stress on the aligner, preventing deformation of the aligner. For example, the aligner may be a "wrinkled" aligner in which at leas a portion of the aligner has one or more surfaces (or regions) that are furrowed, ridged, or creased. For example, the wrinkles in the aligner surface may appear crumpled, folded, or curved. The wrinkles may allow the appliance to bend or expand to a greater degree than an otherwise unwrinkled aligner, thereby preventing material stresses that may damage the appliance.

Wrinkled aligners may prevent the aligner from using its shape. Aligners are typically made of plastic materials and can become relaxed and open up after repeated usage by a patient, as described above. The material relaxation of the aligner with usage can prevent the effective application of force on the teeth. Relaxation of the aligner can occur in as short a period as a few days of usage. The loss of corrective force applied by the aligner to the patient's teeth results in insufficient or inaccurate teeth movement. The corrective measures can include reordering of the same aligners and delay in the orthodontic treatment, which are costly for the patients.

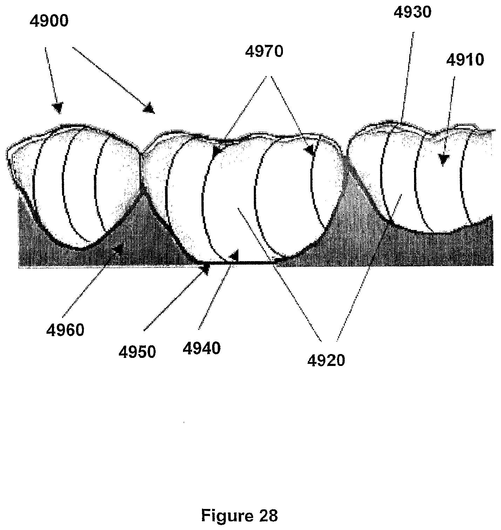

Wrinkled aligners may overcome the loss of force caused by the relaxation of the aligners. Wrinkled aligners can include different designs. As shown in Figure 28, a wrinkled aligner 4900 can include a shell portion 4910 that has an inner surface to be in contact with the patient's teeth, an outer surface 4920, a tip portion 4930, a bottom portion 4940 along the base line 4950 of the shell portion 4910. The shell portion 4910 can have varying thicknesses in different areas. The shell portion 4910 can also comprise a plurality of layers of the same or different materials.

The dental aligner 4900 is worn over the patient teeth over gum 4960. Wrinkles 4970 can be produced on one of or both the outer surface 4920 (i.e. the buccal side) and the inner surface (i.e. lingual side) of the wrinkled aligner 4900. The wrinkles 4970 can be aligned from tip portion 4930 to the bottom portion 4940 of the wrinkled aligner 4900 at a predetermined spacing between the adjacent wrinkles. The wrinkles 4970 allow the wrinkled aligner 4900 to relax when it receives stresses during patient's biting, or when the aligner is taken off and put on. The wrinkled shape can automatically restore when the stresses are removed. The wrinkled aligner 4900 therefore is free of the relaxation problems in the prior art aligners. In other words, the wrinkled aligners 4900 include robust structure designs that can tolerate stresses and maintain functional shape under stresses.

The wrinkles can be formed in different orientations and locations of the shell-shaped dental aligners. The wrinkle can also be made in parallel to the base line 4950 of the wrinkled aligner 4900 (i.e. across the direction from the tip portion 4930 to the bottom portion 4940), which helps to prevent the wrinkled aligner to open near the base. The wrinkles can also be produced in both horizontal (parallel to the base line 4950 of the aligner) and vertical (from the tip portion to the bottom portion) directions. In another arrangement, a corrugated structure or "wrinkles" can be produced along the on the base line 4950 of the wrinkled aligner 4900. The corrugated structure along the base line 4950 can generate elastic shrinking stress over the tooth, which can overcome the above described relaxation problem and extends the life of the wrinkled aligner 4900. Various wrinkle arrangements can be applied singularly or in combination for optimize performance.

Wrinkled aligners can be fabricated by a variety of manufacturing methods. In one arrangement of aligner manufacturing, a patient's dental arch model is placed on a base plate of a vacuum former machine. The digital dental aligner model specifies a shell portion including an outer surface and an inner surface to be in contact with the patient's tooth, a bottom portion to be placed near the gingival of the patient's tooth, and a tip portion on the opposite side of the bottom portion. The digital dental aligner model also defines one or more wrinkles formed over at least one of the outer surface of the shell portion, the inner surface of the shell portion, and the bottom portion. An apparatus produces a physical dental aligner having a wrinkled surface in accordance with the digital dental aligner model.

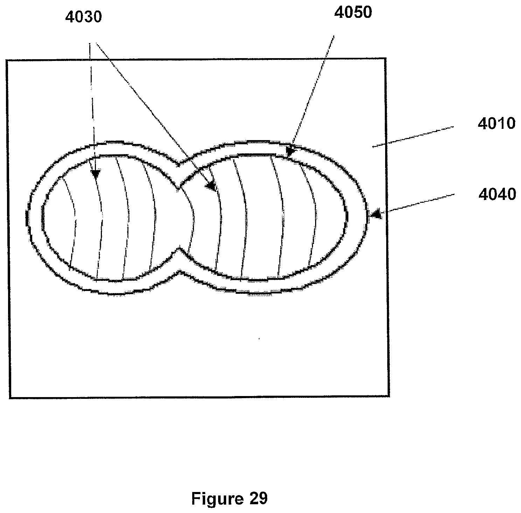

As shown in Figure 29, a sheet 4010 of aligner-making material is attached to a sheet holder and then lifted up near a heating element. The sheet can be made of uniform distribution of a single material or comprise multiple layers of different materials. After the aligner-making material is heated by a specified time, the sheet holder is pressed on the patient's dental arch model on the base plate. A vacuum pump removes air at the bottom of the base plate to cause the softened aligner making material to relax and fittingly form around the surface the patient's dental arch model. The sheet of the aligner making material is then cut out along the gingival line 4040 to produce an aligner 4050 that can perfectly fit to the patient teeth. This process of aligner making is referred to as the vacuum forming.

In one method of wrinkle making, some material is extruded on other tooth surfaces of the patient's dental arch model that is fixed on to the base plate. The protrusions formed by the extruded material are distributed (e.g. the locations and the density of the wrinkles, the width and the depth of the wrinkles, etc.) to compatible with the wrinkles to be formed over the aligner. The extruded material is subsequently hardened over the surfaces of the arch model. When the soft sheet of aligner making material is pressed over the arch model, the protrusions formed by the extruded material produce the wrinkles 4030 on the sheet of the aligner making material. A wrinkled aligner 4050 is obtained after the cutting of the sheet.

In a variation of the above method of manufacturing wrinkled aligners, a high-tension material is placed at the locations of the dental arch model where the wrinkles are to be formed. The high strength material is absorbed and become embedded into the aligner material after the sheet of aligner making material is heated and pressed over the arch model. The distribution of high strength material creates an uneven elasticity distribution over the aligner surface that produces the wrinkles 4030.

In yet another variation, a high-tension material is placed in parallel stripes over the sheet of aligner making material before it is placed in the sheet holder. The subsequent heating causes the high-tension material to penetrate and embed in the sheet, which produces wrinkles 4030 in the wrinkled aligner 4050.

A physical dental aligner without wrinkles may be first produced by the above described vacuum forming process. The physical dental aligner can then subsequently be softened by heating. A thermal applier such as a stylus is then pressed against the physical dental aligner. The thermal applier moves across the surface to etch off materials to the wrinkles at the desired locations. Alternatively, wrinkles can be cut over the surface of the aligner by a position-controlled cutter or a laser beam.

In still another variation, aligner components are fabricated by CNC based manufacturing as described above in accordance with a digital dental aligner model. The digital dental aligner model includes wrinkle features over the surfaces of the dental aligner. The aligner components are fabricated in accordance with the digital dental aligner model having the wrinkle features. The dental aligner components are subsequently assembled to produce the physical dental aligner.

The wrinkled aligner may be milled out of a plastic block in accordance with digital aligner model. The milled out portion can be a portion of a tooth or a group of teeth. The inner hollow portion of the partially milled plastic block is then filled up with a soft holding material under heating. The holding material is soft at elevated temperatures and is hardened at room temperature. The holding material forms a handle after it cools off to room temperature. The partially milled plastic block can be held from outside while it is milled by CNC based manufacturing. An aligner having wrinkled surfaces can be produced after machining. The holding material may then subsequently be removed by heating. The holding material can be wax, silicon, Epoxy or other kind of removable glue.

In yet another variation, a special clamp can also be used to hold the partially milled aligner parts in place while the rest of the aligner is milled using the CNC machine. The aligner components may be assembled to form an aligner having one or more wrinkled surface. The aligner components include physical features to permit the aligner components to be assembled into the physical dental aligner having at least one wrinkled surface. The CNC based manufacturing can include one or more of milling, stereo lithography, laser machining, molding, and casting.

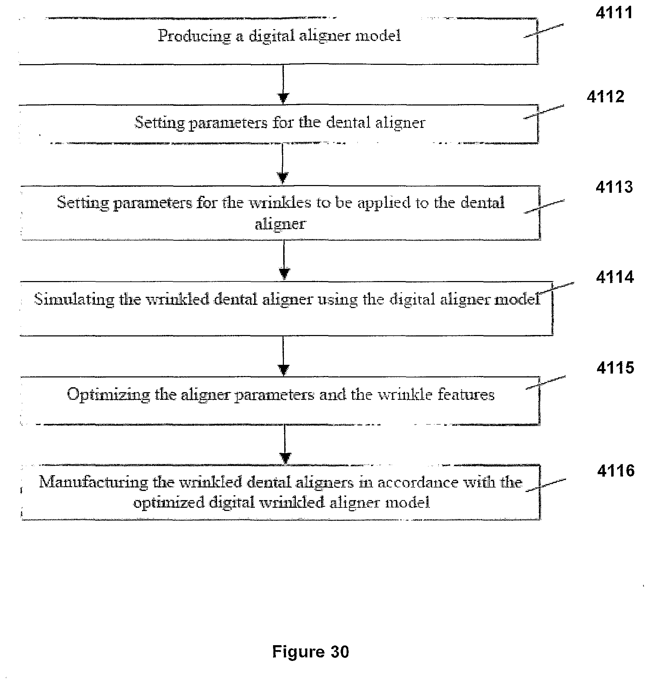

Figure 30 illustrates a process of designing and fabrication of a wrinkled dental aligner. A dental aligner model is first obtained using CAD software (step 4111). In general, the features of the wrinkles can be co-optimized with the properties of the aligners. For example, the wrinkle design may take into account the aligner material (e.g., stiffer materials may require larger wrinkles), the geometric parameters (curvature, thickness of the aligner), and the intended degree of teeth movement the aligner is to generate. These parameters may be set in step 4112. A predetermined set of wrinkle features can then be added to the surface of the digital aligner model in step 4103. The feature can include the locations, the orientations, and the density of the wrinkles, the width and the depth of the wrinkles, as well as the embedded materials that are used to produce the wrinkles.

The properties of the aligner and the features of the wrinkles on the aligners are next simulated for the optimal orthodontic performance and pre-stored in the digital aligner model in step 4114. The responses of the wrinkled aligners to various conditions during the patient's use of the wrinkled aligner are simulated using Finite Element Analysis (FEA). The conditions can include stresses applied by the patient during the biting, the wearing, and the removal of the aligner. The conditions can also include temperature changes when the patient has hot drinks or ice cream. Using Virtual Prototyping Software (a component of CAD software), the properties and performance of the wrinkled aligner can be analyzed under various simulated mechanical loads. The wrinkle features and the aligner properties can be varied in iterations for optimized performance in step 4115. Finally, the optimized wrinkle configurations are stored in a computer and used to control the fabrication of the wrinkled aligner in step 4116.

### Lateral Correction Aligners

Dental appliances may also be designed and fabricated for altering the palate of the upper dental arch. These aligners may be referred to as lateral correction aligners. Lateral correction aligners typically apply force to the palate and/or the teeth to help remodel the dental arch. For example, a lateral correction aligner may help either expand (or contract) a subject's palate. Described herein are appliances (e.g., lateral correction aligners) comprising a shell having a palate-spanning region. As previously described, the shell typically includes an outer surface and an inner surface, and at least a portion of the inner surface is configured to contact a subject's teeth. Lateral correction aligners typically include one or more regions that span at least a portion of a subject's palate (e.g., a palate-spanning region).. This palate-spanning region may contact the anterior portion of the palate, such as the hard palate region.

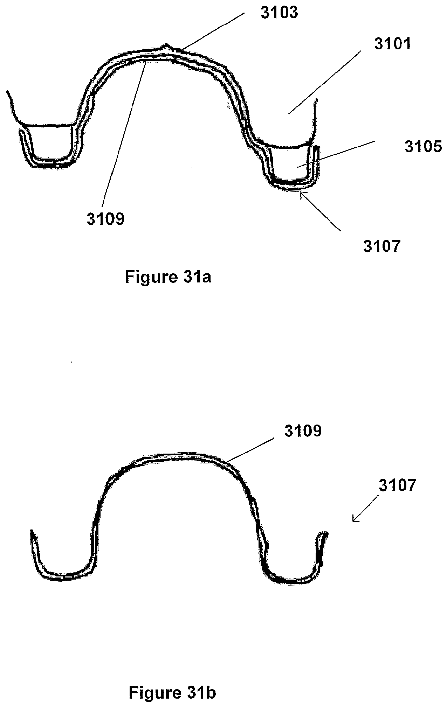

Figure 31a and 31b show a cross-section through a lateral correction aligner. In Figure 31a, the aligner 3107 is worn on the upper dental arch. In Fig. 31A this could be a subject's actual dental arch, or a model of the dental arch which includes both the teeth 3105 and anterior palate region 3101. This lateral correction aligner 3107 includes a palate-spanning region 3109 that connects region of the shell 3107 that contact the teeth. Figure 31b shows the lateral correction aligner (in cross-section) of Figure 31a without the upper dental arch.

When the lateral correction dental aligner is worn, as shown in Figure 31a, the palate-spanning region 3107 applies force to remodel the palate region of the upper dental arch. In some variations, the palate-spanning region may also provide additional support for the other region of the shell to enhance remodeling of the teeth 3015. In some variations, the palate-spanning region may push against the palate at one or more contact sites (or over the entire surface) of the palate-spanning region. Thus, the palate-spanning region may substantially conform to the palate or engage the palate. The palate-spanning region may engage the grooves (e.g., the longitudinal palatine grooves and canals).

As described previously for other types of dental aligners, the lateral correction dental aligner may be designed to remodel the palate in a series of steps in which the subject wears (for an appropriate treatment time) each of a series of aligners that proceed towards a final configuration. A practitioner (e.g., an orthodontist) determines the final configuration for the patient's dental arch (including teeth and palate). The practitioner designs a treatment plan that specifies movement paths for the patient's teeth and arch with our without the use of a computer, and the movement paths are divided into a plurality of successive treatment steps in step (e.g., three to forty treatment steps). Each step may correspond to one or more dental aligners to be worn.

In designing the treatment steps, as well as the final configuration, the practitioner may be guided by an awareness (or a model) of how the dental arch itself may move. For example, as would be known by one of skill in the art, different regions of the palate may be more easily modified by treatment than other regions. In general, the more lateral regions of the hard palate may be more easily moved than the upper (e.g., central) region of the hard palate. Thus, a lateral correction dental aligner may be configured to expand the palate from the regions closer to the teeth than the more central region. Treatment steps may be planned using empirical information about remodeling the palate. For example, predictions about how any particular subject's palate may be remodeled may be based on comparing information about the subject (e.g., age, gender, size of the palate, etc.) with measurements or treatments performed on other, similar subjects. Treatment may also be based on models for the expansion (or contraction) of the palate based on published data. For example, see Carmen M, Marcella P, Giuseppe C, Roberto A., "Periodontal evaluation in patients undergoing maxillary expansion" (J Craniofac Surg. 2000 Sep;11(5):491-4); Ramieri GA, Spada MC, Austa M, Bianchi SD, Berrone S., "Transverse maxillary distraction with a bone-anchored appliance: dento-periodontal effects and clinical and radiological results" (Int J Oral Maxillofac Surg. 2005 Jun;34(4):357-63. Epub 2005 Jan 24); Davidovitch M, Efstathiou S, Same O, Vardimon AD., "Skeletal and dental response to rapid maxillary expansion with 2- versus 4-band appliances" (Am J Orthod Dentofacial Orthop. 2005 Apr;127(4):483-92); and Ferrario VF, Garattini G, Colombo A, Filippi V, Pozzoli S, Sforza C., "Quantitative effects of a nickel-titanium palatal expander on skeletal and dental structures in the primary and mixed dentition: a preliminary study" (Eur J Orthod. 2003 Aug;25(4):401-10).

Treatment plans and the design of lateral correction aligners may be generated either manually or automatically. For example, software may be used to suggest treatment plans (and aligner designs), or it may be used to design the aligners used for treatment. As described above, software may be used to digitally model the dental arch (including the upper palate), as well as to manipulate the position of the teeth and upper palate. The software may include constraints on the remodeling of the upper palate, consistent with either empirical data using similar aligners or appliances, or based on models of a generic upper palate. In some variations, the software may derive a model for remodeling the upper palate based on data taken from the individual patient, such as X-ray or other scanning data, as well as molds or casts made of the hard palate region (and/or other regions of the subject's head and mouth).

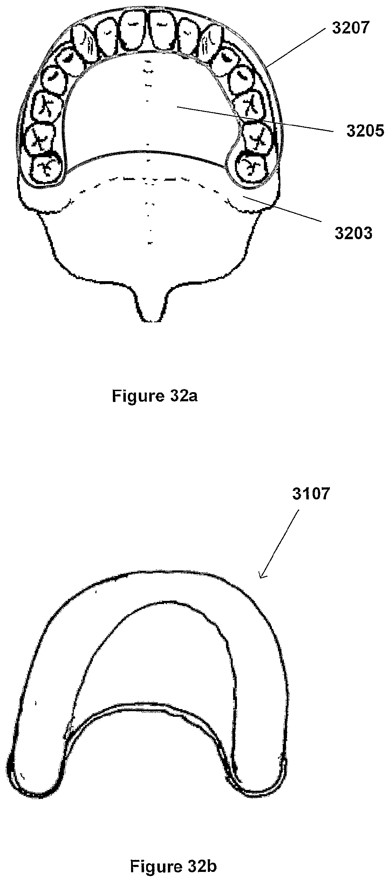

Figures 32a and 32b show views of one variation of a lateral correction aligner as described herein. In Figure 32a, the lateral correction aligner 3207 is shown positioned on a subject's upper dental arch. The shell portion of the dental aligner contacts the subject's teeth, while the palate-spanning region 3205 contacts a portion of the subject's hard palate 3203. As described above, the palate-spanning region may be a single piece that connects to the teeth-contacting region of the shell, or it may be multiple pieces, (e.g., leaving one or more holes or gaps) exposing regions of the palate. The palate-spanning region may be a strip or a plurality of strips spanning the palate from any two or more points on the perimeter of the dental arch, where the palate-spanning region attaches to the tooth/gum-contacting region of the aligner.

In operation, the lateral correction aligner may be used to remodel the palate by applying force to both the teeth. It may be beneficial to distribute the force applied by the palate-spanning region over the entire dental arch (e.g., by including a palate-spanning region with a shell that covers most or all of the upper teeth). The force applied by the palate-spanning region may contribute to the movement of the teeth as well as the palate, just as the force applied by the shell against the teeth may contribute to the remodeling of the palate. In addition, the palate may be remodeled in any appropriate direction by a lateral correction aligner, including the anterior/posterior direction (e.g., from the front of the mouth to the back of the mouth) and the left/right direction. A lateral correction aligner may also remodel the dental arch by distalization of the teeth.

A lateral correction dental aligner may be used even it is not necessary or desirable to remodel the subject's palate. The lateral correction aligner may add support to the region of the aligner shell contacting (e.g., moving) the teeth. One or more steps of a treatment series may include a lateral correction aligner (other steps in the treatment may include aligners that do not have a palate-spanning region). In general, different types of aligners described herein (or aligners with different features, e.g., wrinkled aligners, aligners having palate-spanning regions, etc.) may be used at different steps of a treatment. In some variations, it may be desirable to use a lateral correction dental aligner in the same step as an aligner that does not include a palate-spanning region. For example, a subject may wear a dental aligner without a palate-spanning region during the day and a lateral alignment dental aligner when sleeping. The shell regions of both aligners may be identical except for the presence or absence of the palate-spanning region.

The palate-spanning region of the aligner may provide force against the teeth as well as the palate. Thus the palate-spanning region may comprise a material capable of providing sufficient force to effect movement of the palate and/or teeth. For example, the palate-spanning region may comprise a support piece or brace. The support piece typically gives structural support to the aligner, permitting it to maintain force against the palate and/or teeth.

A support piece may comprise any material having sufficient strength, stiffness (or elasticity), and durability. For example, the support piece may comprise a metal (including alloys such as nickel titanium alloys), ceramic, polymer (e.g., polypropylenes, polycarbonates, etc.), or some combination thereof. The shape of the support pieces may also provide support. For example, the support piece may be a spring (e.g., coiled spring, leaf spring, etc.), or may be layered to provide additional support. In some variations, the palate-spanning region does not include an additional support piece, because the material from which the palate-spanning region is made has sufficient strength to remodel the dental arch (e.g., .teeth and/or palate) as desired.

The entire palate-spanning region of the shell may include a support piece, or the support piece may be included in only a portion of the palate-spanning region. In some variations, the palate-spanning region comprises only a support piece. The support piece may be attached to the upper or lower portions of the palate-spanning region, or it may be embedded within the palate-spanning region. More than one support piece may be used.

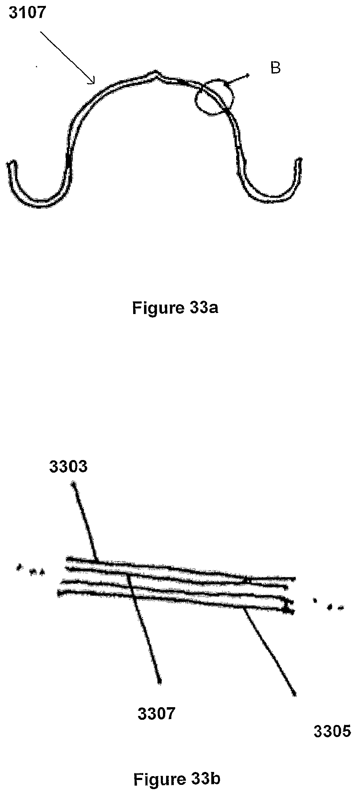

Figure 33a and 33b shows one example of a palate-spanning region of an aligner 3107 in which the support piece 3307 is sandwiched between an inner 3303 and outer 3305 shell layer of the aligner. As described above, a lateral-correction aligner may be fabricated using any of the methods described herein. For example, the aligner may be fabricated as a multi-layered aligner in which the layers (including the support piece) are vacuum-formed onto a model of the upper dental arch. A lateral correction aligner may include any of the features previously described, including fluid permeable features, snap-on features, wrinkles, etc.

The palate-spanning region (including the support piece) may be configured to minimize discomfort. For example, the palate-spanning region may comprise a coating to smooth the palate-spanning region, particularly the portion of the aligner that may contact the tongue. Coatings may smooth the surface of the aligner, and may have additional beneficial effects. Coatings may include wetting coatings (e.g., silicones, etc.), hygienic coatings (e.g., antibacterial coatings, etc.), friction-reducing coatings (e.g., waxes, lubricious coatings), odor-absorbent coatings (e.g., containing activated charcoal, etc.), or the like.

As described, the plate spanning region (including the support piece) may be made of any appropriate material. For example, the plate-spanning region may be made of any of the layered materials described herein. In some variations, the plate-spanning region comprises a fluid (e.g., water or gas) permeable material, and may include one or more passages. Aligners with plate spanning regions may be more comfortable for a user when at least a portion of the plate spanning region comprises a permeable material.

Throughout this description, particular examples have been discussed, including descriptions of how these examples may address certain disadvantages in related art. However, this discussion is not meant to restrict the various examples to methods and/or systems that actually address or solve the disadvantages. Accordingly, the present invention is defined by the appended claims and should not be limited by the description herein.

Further embodiments
1. A device for producing corrective movement in a subject's teeth, the device comprising: a dental aligner configured to be worn on a subject's teeth, the dental aligner comprising: a shell portion having an outer surface and an inner surface, wherein at least a portion of the inner surface is configured to contact the subject's tooth; and one or more through-holes passing from the outer surface to the inner surface of the shell portion of the dental device.
2. The device of embodiment 1, wherein the through-hole is configured to mate with a connector.
3. A system for producing corrective movement in a subject's teeth, comprising: a dental aligner device having one or more through-holes, wherein the dental aligner device is configured to be worn on the subject's teeth; and one or more connectors, wherein the connector is configured to engage the through- hole when the dental aligner is worn on the subject's teeth.
4. The system of embodiment 3, wherein the one or more connectors include one or more of posts, nodules, and bumps.
5. The system of embodiment 3, wherein the dental aligner contacts the subject's teeth when the connector is engaged with the through-hole in the dental aligner.
6. The system of embodiment 3, wherein the dental aligner is fabricated by one or more of vacuum forming, milling, stereo lithography, laser machining, molding, and CNC based manufacturing.
7. The system of embodiment 3, wherein the dental aligner comprises: a shell portion having an outer surface and an inner surface to be in contact with the subject's tooth; a bottom portion to be placed near the gingival line of the subject's tooth; and a tip portion on the opposite side of the bottom portion.
8. The system of embodiment 7, wherein the through-hole of the dental aligner device passes through the bottom portion or the tip portion.
9. The system of embodiment 3, wherein the connector is configured to be secured to a subject's tooth.
10. A system for producing a snap-on dental aligner for dental treatment, comprising: a guide to indicate the locations of through-holes to be formed in a dental aligner; a positioner to position a hole-maker with respect to the dental aligner based on the indication of the guide; and a hole-maker to produce through-holes in the dental aligner at the positions indicated by the guide to produce the snap-on dental aligner.
11. The system of embodiment 10, wherein the guide comprises a computer to store the locations of through-holes to be formed in a dental aligner.
12. The system of embodiment 11, wherein the computer is further configured to store locations of one or more connectors to be secured to the subject's teeth, so that the one or more connectors engage the through-holes when the dental aligner is worn on the subject's teeth.
13. The system of embodiment 10, wherein the hole-maker is configured to drill through-holes in the dental aligner.
14. The system of embodiment 10, wherein the hole-maker comprises a mechanical drill bit or a laser.
15. A method for moving a subject's teeth in a dental treatment, comprising: fabricating a dental aligner to be worn on the subject's teeth; producing one or more through-holes in the dental aligner; fixing one or more connectors on the subject's teeth to engage the through-holes; and engaging the one or more connectors on the subject's teeth with the through-holes of the dental aligner to secure the dental aligner on the subject's teeth.
16. The method of embodiment 15, further comprising fixing the one or more connectors on the subject's teeth at locations in registration with the through-holes when the dental aligner is worn on the subject's teeth.
17. The method of embodiment 16, wherein the connector comprises a pre-formed connector.
18. The method of embodiment 16, wherein the connector comprises an adhesive or a UV cross- linkable polymer.
19. The method of embodiment 16, wherein the one or more connectors include one or more of protrusions, nodules, and bumps.
20. The method of embodiment 15, further comprising securing the dental aligner against the subject's teeth to engage the connectors secured on the subject's teeth into the through- holes of the dental aligner.
21. The method of embodiment 15, further comprising fabricating the dental aligner device by one or more of vacuum forming, milling, stereo lithography, laser machining, and molding.
22. The method of embodiment 15, further comprising drilling the one or more through-holes in the dental aligners.
23. A shell-shaped dental aligner for producing predetermined movement in a patient's tooth, comprising: a shell portion comprising a fluid-permeable material; an outer surface of the shell portion; and an inner surface of the shell portion, the inner surface to be in contact with the patient's tooth, wherein the fluid-permeable material can allow fluid to communicate between the patient's tooth and the vicinity of the outer surface.
24. The shell-shaped dental aligner of embodiment 23, wherein the fluid-permeable material allows the permeation of oxygen from the vicinity of the outer surface to the patient's tooth.
24. The shell-shaped dental aligner of embodiment 23, wherein the fluid-permeable material allows the permeation of oxygen from the vicinity of the outer surface to the patient's tooth.
25. The shell-shaped dental aligner of embodiment 23, wherein the fluid-permeable material allows the permeation of saliva between the outer surface and the inner surface.
26. The shell-shaped dental aligner of embodiment 23, further comprising: a bottom portion to be placed near the gingival of the patient's tooth; and a tip portion on the opposite side of the bottom portion.
27. The shell-shaped dental aligner of embodiment 23, wherein the fluid-permeable material comprises a porous polymeric material.
28. The shell-shaped dental aligner of embodiment 23, wherein the fluid-permeable material comprises pores that are drilled by a laser beam.
29. The shell-shaped dental aligner of embodiment 23, wherein the fluid-permeable material comprises micro-channels or pore having diameters in the range of 50 Å to 400 µM.
30. A method for treating a patient's teeth, comprising determining an initial configuration of the patient's teeth; determining a final configuration of the patient's teeth; designing a movement path for at least one of the patient's teeth from the initial configuration to the final configuration; dividing the movement path into a plurality of successive treatment steps, each having a target configuration for the patient's teeth; and producing a dental aligner comprising a fluid-permeable material to move the patient's teeth to the target configuration associated with a treatment step.
31. The method of embodiment 30, wherein the fluid-permeable material comprises a porous polymeric material.
32. The method of embodiment 30, further comprising drilling holes by a laser beam in a dental- aligner material to form a fluid-permeable dental aligner.
33. The method of embodiment 31, wherein the target configuration comprises the target positions and the target orientations of one or more of the patient's teeth.
34. The method of embodiment 31, further comprising molding the dental aligner having the fluid- permeable material using in a casting chamber.
35. The method of embodiment 31, further comprising producing two dental aligners comprising the fluid-permeable material and having substantially identical shape.
36. The method of embodiment 31, wherein the fluid-permeable material comprises pores are formed by subliming a low density granular compound by pressure and/or elevated temperature in a base material.
37. A system for treating a patient's teeth, comprising: a computer configured to determine a target configuration for the patient's teeth; and an apparatus configured to produce a dental aligner comprising a shell portion that comprises a fluid-permeable material, an outer surface, and an inner surface to be in contact with one of the patient's teeth, wherein the fluid-permeable material can allow fluid to communicate between the one of the patient's teeth and the vicinity of the outer surface and the dental aligner is configured to move the patient's teeth to the target configuration.
38. The system of embodiment 37, wherein the fluid-permeable material comprises a porous polymeric material.
39. The system of embodiment 37, wherein the apparatus is configured to drill holes by a laser beam in a dental-aligner material to form a fluid-permeable dental aligner.
40. The system of embodiment 37, wherein the apparatus is configured to mold the dental aligner having the fluid-permeable material using in a casting chamber.
41. The system of embodiment 37, wherein the apparatus is configured to produce fluid-permeable dental aligner comprising micro-channels or pore having diameters in the range of 50 Å to 400 µM.
42. A method for making a multi-layer dental aligner, comprising: placing a first layer of a first aligner-making material over one or more physical tooth models; conforming the first layer of the first aligner-making material to the surfaces of the one or more physical tooth models; placing a second layer of a second aligner-making material over the first layer of the first aligner-making material; and conforming the second layer of the second aligner-making material to the surfaces of the first layer of the first aligner-making material over the one or more physical tooth models to produce the multi-layer dental aligner.
43. The method of embodiment 42, further comprising: heating the first layer of the first aligner-making material; holding the first layer of the first aligner-making material against the one or more physical tooth models; heating the second layer of the second aligner-making material; and holding the second layer of the second aligner-making material against the first layer of the first aligner-making material over the one or more physical tooth models to produce the multi-layer dental aligner.
44. The method of embodiment 43, further comprising: holding the First layer of the first aligner-making material or the second layer of the second aligner-making material against the one or more physical tooth models by vacuum suction.
45. The method of embodiment 42, further comprising: cutting the first layer of the first aligner-making material and/or the second layer of the second aligner-making material along the gingival lines of the physical tooth models to produce the multi - layer dental aligner.
46. The method of embodiment 42, further comprising: cutting the first layer of the first aligner-making material along the gingival lines of the physical tooth models before placing the second layer of the second aligner-making material over the first layer of the first aligner-making material; and cutting the second layer of the second aligner-making material along the gingival lines of the physical tooth models to produce the multi-layer dental aligner.
47. The method of embodiment 42, wherein the first layer of the first aligner-making material has a higher hardness than the second layer of the second aligner-making material.
48. The method of embodiment 42, wherein the first aligner-making material or the second aligner-making material comprises one or more of acrylic, polycarbonate, urethane, and epoxy.
49. The method of embodiment 42, wherein the first aligner-making material is the same as the second aligner-making material.
50. The method of embodiment 42, wherein the second layer of the second aligner-making material has substantially the same color as the patient's teeth.
51. The method of embodiment 42, wherein the one or more tooth models are assembled to form a physical arch model.
52. The method of embodiment 51, wherein the one or more tooth models are attached to a dental base to form the physical arch model.
53. A method for making a multi-layer dental aligner, comprising: heating a first layer of the first aligner-making material; holding the first layer of the first aligner-making material against one or more physical tooth models by vacuum suction; cutting the first layer of the first aligner-making material along the gingival lines of the physical tooth models; heating a second layer of the second aligner-making material; holding the second layer of the second aligner-making material against the first layer of the first aligner-making material over the physical tooth models by vacuum suction; and cutting the second layer of the second aligner-making material along the gingival lines of the physical tooth models to produce the multi-layer dental aligner.
54. The method of embodiment 53, wherein the first aligner-making material has a higher hardness than the second aligner-making material.
55. The method of embodiment 53, wherein the first aligner-making material or the second aligner-making material comprises one or more of acrylic, polycarbonate, urethane, and epoxy.
56. The method of embodiment 53, wherein the first aligner-making material is the same as the second aligner-making material.
57. A multi-layer dental aligner, comprising: a first layer of a first aligner-making material; and a second layer of a second aligner-making material, wherein at least one of the first layer and the second layer is formed by heating a layer of an aligner-making material and holding the layer of the aligner-making material against one or more physical tooth models.
58. The multi-layer dental aligner of embodiment 57, wherein the first layer is formed by heating and holding the first layer of the first aligner-making material against one or more physical tooth models by vacuum suction.
59. The multi-layer dental aligner of embodiment 57, wherein the second layer is formed by heating and holding the second layer of the first aligner-making material against the first layer of the first aligner-making material over the physical tooth models by vacuum suction.
60. The multi-layer dental aligner of embodiment 57, wherein the first layer has a higher hardness than the second layer.
61. The multi-layer dental aligner of embodiment 57, wherein the first aligner-making material is the same as the second aligner-making material.
62. A method for making a non-uniform dental aligner, comprising: non-uniformly heating the sheet of aligner-making material; and holding the sheet of aligner-making material against one or more physical tooth models to produce the non-uniform dental aligner.
63. The method of embodiment 62, further comprising: heating a first section of the sheet of aligner-making material at a higher temperature than a second section of the sheet of aligner-making material.
64. The method of embodiment 62, further comprising: heating a first section of the sheet of aligner-making material for a longer period of time than a second section of the sheet of aligner-making material.
65. The method of embodiment 62, wherein one or more elastic properties of the aligner-making material vary as a function of the temperature or the length of the heating.
66. The method of embodiment 62, further comprising: holding the sheet of aligner-making material against the one or more physical tooth models by vacuum suction.
67. The method of embodiment 66, further comprising: holding the sheet of aligner-making material against the one or more physical tooth models by a non-uniform distribution of vacuum suction.
68. The method of embodiment 62, further comprising: cutting the sheet of aligner-making material along the gingival lines of the physical tooth models to produce the non-uniform dental aligner.
69. The method of embodiment 62, wherein a first section of the sheet of aligner-making material has a higher hardness than a second section of the sheet of aligner-making material.
70. The method of embodiment 62, wherein the aligner-making material comprises one or more of acrylic, polycarbonate, urethane, and epoxy.
71. The method of embodiment 62, wherein the one or more tooth models are assembled to form a physical arch model.
72. The method of embodiment 71, wherein the one or more tooth models are attached to a dental base to form the physical arch model.
73. A method for making a non-uniform dental aligner, comprising: heating a first section of a sheet of aligner-making material at a first temperature for a first period of time; heating a second section of the sheet of aligner-making material at a second temperature for a second period of time; holding the sheet of aligner-making material against the one or more physical tooth models to produce the non-uniform dental aligner by vacuum suction; and cutting the sheet of aligner-making material along the gingival lines of the physical tooth models to produce the non-uniform dental aligner.
74. The method of embodiment 73, wherein one or more elastic properties of the aligner-making material vary as a function of the temperature or the length of the heating.
75. The method of embodiment 73, wherein the first section of a sheet of aligner-making material has one or more different elastic constants different from the second section of a sheet of aligner-making material.
76. The method of embodiment 73, further comprising: holding the sheet of aligner-making material against the one or more physical tooth models by a non-uniform distribution of vacuum suction.
77. The method of embodiment 73, wherein the aligner-making material comprises one or more of acrylic, polycarbonate, urethane, and epoxy.
78. A non-uniform dental aligner, comprising: a layer of aligner-making material shaped to fit on a patient's teeth, wherein the layer of aligner-making material comprise a first section characterized by a first elastic constant and a second section characterized by a second elastic constant.
79. A non-uniform dental aligner of embodiment 78, wherein the layer of aligner-making material is shaped to fit a patient's teeth by non-uniformly heating a sheet of aligner-making material and holding the sheet of aligner-making material against the one or more physical tooth models by vacuum suction.
80. The non-uniform dental aligner of embodiment 78, wherein the aligner-making material in the first section has a higher hardness than the aligner-making material in the second section.
81. The non-uniform dental aligner of embodiment 78, wherein the aligner-making material comprises one or more of acrylic, polycarbonate, urethane, and epoxy.
82. A dental aligner for producing predetermined movement in a patient's tooth, comprising: a shell-shaped portion including an outer surface and an inner surface to be in contact with the patient's tooth; a bottom portion to be placed near the gingival of the patient's tooth; a tip portion on the opposite side of the bottom portion; and one or more wrinkles formed over at least one of the outer surface, the inner surface, and the bottom portion.
83. The dental aligner of embodiment 82, wherein the wrinkles are formed over the outer surface or the inner surface of the shell portion and aligned substantially from the tip portion to the bottom portion.
84. The dental aligner of embodiment 82, wherein the wrinkles are aligned substantially across the direction from the tip portion to the bottom portion.
85. The dental aligner of embodiment 82, wherein the wrinkles include a corrugated structure over the bottom portion.
86. The dental aligner of embodiment 82, wherein the wrinkles are formed by a material that is different from the material in the shell portion.
87. The dental aligner of embodiment 82, wherein the shell portion comprises a material selected from the group consisting of plastics, polymers, urethane, epoxy, plaster, stone, clay, acrylic, metals, wood, paper, ceramics, and porcelain.
88. The dental aligner of embodiment 82, wherein the shell portion comprises varying thicknesses in different areas.
89. The dental aligner of embodiment 82, wherein the shell portion comprises a plurality of layers each comprising the same or different materials.
90. A method for manufacturing wrinkled dental aligner for a patient's arch, comprising: producing a physical dental aligner for the patient's arch, wherein the physical dental aligner comprises substantially smooth surfaces; and producing at least one wrinkle over one of the substantially smooth surfaces on the physical dental aligner to form a wrinkled surface on the dental aligner.
91. The method of embodiment 90, further comprising: simultaneously producing the physical dental aligner and the wrinkled surface on the physical dental aligner.
92. The method of embodiment 90, further comprising: producing the wrinkled surface on the physical dental aligner by one or more of vacuum forming, cutting, milling, etching by a thermal applier, a laser, and CNC based manufacturing.
93. A system for manufacturing shell-shaped dental aligner for producing predetermined movement in a patient's tooth, comprising: a computer configured to store a digital dental aligner model that specifies a shell portion including an outer surface and an inner surface to be in contact with the patient's tooth, a bottom portion to be placed near the gingival of the patient's tooth, a tip portion on the opposite side of the bottom portion, and one or more wrinkles formed over at least one of the outer surface of the shell portion, the inner surface of the shell portion, and the bottom portion; and an apparatus configured to produce a physical dental aligner having a wrinkled surface in accordance with the digital dental aligner model.
94. The system of embodiment 93, wherein the computer is configured to simulate the physical dental aligner having a wrinkled surface using the digital dental aligner model to optimize the properties of the one or more wrinkles.
95. The system of embodiment 94, wherein the properties of the wrinkles include one or more of the locations and orientations of the wrinkles, the spacing between adjacent wrinkles, and the depths of the wrinkles.
96. The system of embodiment 93, wherein the apparatus configured to produce the wrinkled surface on the physical dental aligner by one or more of vacuum forming, cutting, milling, etching by a thermal applier, cutting by a laser beam, and CNC based manufacturing.
97. The system of embodiment 93, wherein the wrinkles are formed over the outer surface or the inner surface of the shell portion and aligned substantially from the tip portion to the bottom portion.
98. The system of embodiment 93, wherein the wrinkles are aligned substantially across the direction from the tip portion to the bottom portion.
99. The system of embodiment 93, wherein the wrinkles include a corrugated structure over the bottom portion.
100. The system of embodiment 93, wherein the shell portion comprises varying thicknesses in different areas.
101. The system of embodiment 93, wherein the shell portion comprises a plurality of layers.
102. A method for manufacturing wrinkled dental aligner for a patient's tooth, comprising: developing a digital dental aligner model specifying at least one wrinkled surface on a dental aligner; and producing a dental aligner having the wrinkled surface in accordance with digital dental aligner model.
103. The method of embodiment 102, further comprising: producing the physical dental aligner having the wrinkled surface by vacuum forming over a dental arch model of the patient, wherein at least one surface of the dental arch model includes features to produce wrinkled surface on the dental aligner.
104. The method of embodiment 102, further comprising: producing the wrinkled surface on the physical dental aligner by embedding a high-tension material under the surface of the physical dental aligner.
105. The method of embodiment 102, further comprising: producing the wrinkled surface on the physical dental aligner by cutting the surface of a physical dental aligner.
106. The method of embodiment 102, further comprising: producing the wrinkled surface on the physical dental aligner etching the surface of the physical dental aligner by a thermal applier or a laser beam.
107. The method of embodiment 102, further comprising: fabricating aligner components using CNC based manufacturing in accordance with the digital dental aligner model; and producing the physical dental aligner having the wrinkled surface by assembling the aligner components.
108. The method of embodiment 107, wherein the CNC based manufacturing includes one or more of milling, stereo lithography, laser machining, molding, and casting.
109. The method of embodiment 107, further comprising: producing physical features on the aligner components to permit the aligner components to be assembled into the physical dental aligner having at least one wrinkled surface.
110. The method of embodiment 102, further comprising: simulating the dental aligner having the wrinkled surface using the digital dental aligner model; and optimizing the properties of the wrinkles on the wrinkled surface.
111. The method of embodiment 110, wherein the properties of the wrinkles include one or more of the locations of the wrinkles, the orientations of the wrinkles, the spacing between adjacent wrinkles, and the depths of the wrinkles.
112. The method of embodiment 102, further comprising: developing the digital dental aligner model based on a digital dental arch model.
113. A method for manufacturing wrinkled dental aligner for a patient's arch, comprising: developing a digital dental arch model based the patient's arch; developing a digital dental aligner model based on the digital dental arch model, wherein the digital dental aligner model specifies one or more wrinkles on a surface; and producing a wrinkled dental aligner in accordance with the digital dental aligner model.
114. The method of embodiment 113, further comprising: segmenting the digital dental aligner model into a plurality of manufacturable digital aligner components; producing physical aligner components using Computer Numerical Control (CNC) based manufacturing in accordance with the digital aligner components; and assembling the physical aligner components to form the wrinkled dental aligner.
115. The method of embodiment 114, wherein the CNC based manufacturing includes one or more of milling, stereo lithography, laser machining, molding, and casting.
116. The method of embodiment 114, further comprising: producing physical features on the aligner components to permit the aligner components to be assembled into the physical dental aligner having at least one wrinkled surface.
117. A system for manufacturing a wrinkled dental aligner for a patient, comprising: a computer configured to store a digital dental aligner model specifying at least one wrinkled surface on the wrinkled dental aligner; and an apparatus configured to produce the wrinkled dental aligner in accordance with digital dental aligner model.
118. The system of embodiment 117, wherein the computer is configured to simulate the wrinkled dental aligner using the digital dental aligner model and to optimize the properties of the wrinkled surface.
119. The system of embodiment 118, wherein the properties of the wrinkled surface include one or more of the locations of the wrinkles, the orientations of the wrinkles, the spacing between adjacent wrinkles, and the depths of the wrinkles.
120. The system of embodiment 117, wherein the apparatus is configured to produce the wrinkled dental aligner by one or more of vacuum forming, cutting, etching by a thermal applier, cutting by a laser beam, and CNC based manufacturing.
122. A method for treating a patient's teeth, comprising
   determining a target configuration for the patient's teeth;
   producing at least two dental aligners having substantially identical shape; and using the two dental aligners to move the patient's teeth to the target configuration.
123. The method of embodiment 122, wherein the two dental aligners comprise different material compositions.
124. The method of embodiment 122, wherein each dental aligner is used for not longer than three days.
125. A lateral correction dental aligner for remodeling a subject's upper dental arch including the palate, the aligner comprising: a shell having an outer surface and an inner surface, the shell comprising: a tooth contacting region configured to contact the teeth of the subject's upper arch; and a palate-spanning region, wherein the palate-spanning region is configured to contact the subject's upper palate and provide force to remodel the subject's upper arch.
126. The lateral correction dental aligner of embodiment 125, wherein the palate-spanning region further comprises a support piece configured to provide structural support to the palate- spanning region.
127. The lateral correction dental aligner of embodiment 125, wherein the palate-spanning region comprises a fluid-permeable material.
128. The lateral correction dental aligner of embodiment 125, wherein the palate-spanning region spans the majority of the hard palate.
129. A method for reshaping a patient's dental palate, comprising determining an initial configuration of the patient's teeth and upper palate region; determining a final configuration of the patient's teeth and upper palate region; designing a movement path for at least a portion of the upper palate region from the initial configuration to the final configuration; dividing the movement path into a plurality of successive treatment steps; and producing a plurality of dental aligners including a palate-spanning region to remodel the upper palate region to the target configuration.

## Claims

1. A method of producing dental aligners, comprising determining (2810) an initial configuration of the patient's teeth;
determining (2820) a final configuration of the patient's teeth;
designing (2830) a movement path for at least one of the patient's teeth from the initial configuration to the final configuration;
dividing (2840) the movement path into a plurality of successive treatment steps, each having a target configuration for the one of the patient's teeth; and
producing two or more dental aligners of substantially identical shape, the aligners being adapted to move the one of the patient's teeth to the target configuration; wherein-producing the aligners comprises producing the aligners comprising a fluid-permeable material allowing oxygen and/or saliva to pass through the produced aligners.

2. The method of claim 1, further comprising
estimating the amount of time a treatment step will take; and
estimating an optimal wearing interval for the dental aligners.

3. The method of claim 2, wherein the step of producing two or more dental aligners of substantially identical shape comprises producing the number of dental aligners needed for the treatment step based on the estimated amount of time the treatment step will take and the estimate of the optimal wearing interval.

4. The method of claim 1, further comprising:
simulating the dental aligners of substantially identical shape needed for the target configuration at the treatment steps using a digital aligner model; and
producing two or more dental aligners of substantially identical shape in accordance with the digital aligner model.

## Patentansprüche

1. Verfahren zur Herstellung von Zahn-Alignern, mit
Ermitteln (2810) einer Ausgangskonfiguration der Zähne eines Patienten;
Ermitteln (2820) einer Endkonfiguration der Zähne des Patienten;
Gestalten (2830) einer Bewegungsbahn für mindestens einen der Zähne des Patienten von der Ausgangskonfiguration zu der Endkonfiguration;
Unterteilen (2840) der Bewegungsbahn in mehrere aufeinanderfolgende Behandlungsschritte, wovon jeder eine Zielkonfiguration für den einen der Zähne des Patienten hat; und
Erzeugen zweier oder mehrerer Zahn-Aligner mit im Wesentlichen identischer Form, wobei die Aligner ausgebildet sind, den einen der Zähne des Patienten zu der Zielkonfiguration zu bewegen;
wobei Herstellen der Aligner umfasst: Herstellen der Aligner derart, dass sie ein Fluiddurchlässiges Material aufweisen, so dass ein Durchtreten von Sauerstoff und/oder Speichel durch die hergestellten Aligner möglich ist.

2. Verfahren nach Anspruch 1, das ferner umfasst
Abschätzen einer Zeitdauer, die für einen Behandlungsschritt erforderlich sein wird; und
Abschätzen eines optimalen Verschleißintervalls für die Zahn-Aligner.

3. Verfahren nach Anspruch 2, wobei der Schritt des Herstellens zweier oder mehrerer Zahn-Aligner mit im Wesentlichen identischer Form umfasst: Herstellen der Anzahl von Zahn-Alignern, die für den Behandlungsschritt erforderlich ist, auf der Grundlage der abgeschätzten Zeitdauer, die für den Behandlungsschritt erforderlich sein wird, und der Abschätzung des optimalen Verschleißintervalls.

4. Verfahren nach Anspruch 1, das ferner umfasst:
Simulieren der Zahn-Aligner mit im Wesentlichen identischer Form, die für die Zielkonfiguration in den Behandlungsschritten erforderlich sind, unter Anwendung eines digitalen Aligner-Modells; und
Herstellen zweier oder mehrerer Zahn-Aligner mit im Wesentlichen identischer Form entsprechend dem digitalen Aligner-Modell.

## Revendications

1. Procédé de production de gouttières dentaires, comprenant la détermination (2810) d'une configuration initiale des dents du patient ;
la détermination (2820) d'une configuration finale des dents du patient ;
la conception (2830) d'un trajet de mouvement pour au moins l'une des dents du patient depuis la configuration initiale vers la configuration finale ;
la division (2840) du trajet de mouvement en une pluralité d'étapes de traitement successives, chacune ayant une configuration cible pour l'une des dents du patient ; et
la production de deux gouttières dentaires ou plus de forme sensiblement identique, les gouttières étant adaptées pour déplacer l'une des dents du patient vers la configuration cible ;
dans lequel la production des gouttières comprend la production des gouttières comprenant un matériau perméable aux liquides permettant à l'oxygène et/ou à la salive de passer à travers les gouttières produites.

2. Procédé selon la revendication 1, comprenant en outre
l'estimation de la durée qu'une étape de traitement prendra ; et
l'estimation d'un intervalle de port optimal pour les gouttières dentaires.

3. Procédé selon la revendication 2, l'étape de production de deux gouttières dentaires ou plus de forme sensiblement identique comprenant la production du nombre des gouttières dentaires requises pour l'étape de traitement sur la base de la durée estimée que l'étape de traitement prendra et de l'estimation de l'intervalle de port optimal.

4. Procédé selon la revendication 1, comprenant en outre :
la simulation des gouttières dentaires de forme sensiblement identique requise pour la configuration cible aux étapes de traitement utilisant un modèle d'alignement numérique ; et
la production de deux gouttières dentaires ou plus de forme sensiblement identique selon le modèle d'alignement numérique.
